(19) Europäisches Patentamt / European Patent Office / Office européen des brevets

(11) EP 3 487 702 B1

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(21) Anmeldenummer: **17742245.8**

(22) Anmeldetag: **20.07.2017**

(51) Int Cl.:
***B32B 27/30*** (2006.01) ***B32B 27/40*** (2006.01)
***C08F 265/06*** (2006.01) ***C08F 285/00*** (2006.01)
***C08F 290/06*** (2006.01) ***C08F 290/14*** (2006.01)
***C09D 151/00*** (2006.01) ***C09D 151/08*** (2006.01)
***C08G 18/66*** (2006.01) ***C08G 18/67*** (2006.01)
***C08G 18/75*** (2006.01) ***C08G 18/76*** (2006.01)
***C08G 18/34*** (2006.01) ***C08G 18/42*** (2006.01)

(86) Internationale Anmeldenummer:
**PCT/EP2017/068348**

(87) Internationale Veröffentlichungsnummer:
**WO 2018/015491 (25.01.2018 Gazette 2018/04)**

(54) **WÄSSRIGE DISPERSIONEN UMFASSEND MEHRSTUFIG HERGESTELLTE POLYMERISATE MIT POLYURETHANEN SOWIE DIESE ENTHALTENDE BESCHICHTUNGSMITTELZUSAMMENSETZUNGEN**

MULTI-STAGE POLYMERISATES CONTAINING AQUEOUS DISPERSIONS AND COATING COMPOSITIONS CONTAINING THEM

DISPERSIONS AQUEUSES CONTENANT DES PRODUITS DE POLYMERISATION MULTICOUCHES CONTENANT DES POLYURETHANES ET COMPOSITIONS D'AGENT DE REVETEMENT LES CONTENANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2016 EP 16180449**

(43) Veröffentlichungstag der Anmeldung:
**29.05.2019 Patentblatt 2019/22**

(73) Patentinhaber: **BASF Coatings GmbH**
**48165 Münster (DE)**

(72) Erfinder:
- **CORTEN, Cathrin**
  **48165 Muenster (DE)**
- **EIERHOFF, Dirk**
  **48165 Muenster (DE)**
- **NIMZ, Wilma**
  **48165 Muenster (DE)**
- **FREITAG, Nicole**
  **48165 Muenster (DE)**
- **GRUMPE, Heinz-Ulrich**
  **48151 Münster (DE)**
- **VIENENKÖTTER, Mechthild**
  **48165 Muenster (DE)**

(74) Vertreter: **BASF IP Association**
**BASF SE**
**GBI-C006**
**67056 Ludwigshafen (DE)**

(56) Entgegenhaltungen:
**WO-A1-01/25307** **WO-A1-2015/007427**
**DE-A1- 19 914 896** **DE-A1-102012 215 127**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 487 702 B1

## Beschreibung

Die vorliegende Erfindung betrifft wässrige Dispersionen enthaltend mehrstufig hergestellte Polymerisate von Mischungen olefinisch ungesättigter Verbindungen enthaltend mindestens ein olefinisch ungesättigte Gruppen aufweisendes Polyurethan, sowie deren Herstellung und Verwendung, insbesondere auf dem Gebiet der Automobillackierung. Des Weiteren betrifft die vorliegende Erfindung einen wässrigen Basislack, welcher die mehrstufig hergestellten Polymerisate enthält.

## Stand der Technik

Aus dem Stand der Technik sind Polymere bekannt, die als Bindemittel für die Automobillackierung verwendet werden können. Ein solches Bindemittel muss eine Vielzahl von Eigenschaften erfüllen. So muss es in mehrschichtigen modernen Lackaufbauten, wie sie in der Automobilindustrie eingesetzt werden, verwendet werden können.

Aus dem Stand der Technik (vgl. z.B. die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist das folgende Verfahren bekannt, bei dem

(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird

und so ein mehrschichtiger Lackaufbau erhalten wird.

Dieses Verfahren wird beispielsweise in großem Umfang sowohl für die Erstlackierung (OEM) von Automobilen sowie der Lackierung von Metall- und Kunststoffanbauteilen eingesetzt.
Die so erhaltene mehrschichtige Lackierung muss eine Vielzahl von Eigenschaften erfüllen.

Kommt es zu Beschichtungsfehlern, werden die Karossen ein zweites Mal mit dem Basislack und Klarlack gemäß oben genannten Verfahren beschichtet. Hierbei kann bei der OEM-Automobilreparaturlackierung der gleiche Lack wie bei der ersten Beschichtung verwendet werden. Es kann allerdings auch ein Klarlack, der nicht bei hohen Temperaturen (etwa 140 °C), sondern schon bei deutlich niedrigeren Temperaturen (etwa 80 °C) aushärtet, verwendet werden. Die dabei resultierende Lackierung muss den hohen Ansprüchen der Automobilindustrie in Bezug auf Aussehen und Beständigkeit entsprechen, besonders die Haftung zwischen dem bei der Reparaturlackierung eingesetzten Basislack und der Erstlackierung kann problematisch sein.

Ein seit vielen Jahren im Stand der Technik bekanntes Polymer, welches bis heute hohe Relevanz als Bindemittel in der Automobilserienlackierung hat, ist ein aus der WO 92/15405 bekanntes Polyurethan. Dieses Bindemittel wird mit dem Zweck eingesetzt die Reparaturhaftung zu verbessern und kann deshalb als Referenz für Haftungseigenschaften dienen.

Hong, Kim, Kim und Park beschreiben in dem Korea Polymer Journal (Korea Polym. J., Vol. 7, No. 4, S. 213-222) mehrstufig aufgebaute Polymerisate zum Einsatz als Bindemittel in Metallic-Lackierungen. Diese werden über einen Prozess hergestellt, bei dem die erste Stufe des Polymerisats durch einen Batch-Prozess hergestellt wird und die zweite und dritte Stufe jeweils als verhungernde Polymerisation durchgeführt werden.

## Aufgabe

Der vorliegenden Erfindung lag also die Aufgabe zugrunde, eine wässrige Dispersion eines Polymerisats zur Verfügung zu stellen, mit Hilfe dessen sich Beschichtungen herstellen lassen, die die oben beschriebenen Probleme lösen.

Hierunter ist eine Haftungsverbesserung sowohl bei der Lackierung von Metall- und Kunststoffsubstraten als auch insbesondere bei der Autoreparaturlackierung zu verstehen, sowohl für den Fall von OEM-Klarlacken mit einer Einbrenntemperatur von in der Regel etwa 140°C, als auch für den Fall von Reparaturklarlacken mit einer Einbrenntemperatur von in der Regel etwa 80°C. Bei der Haftungsverbesserung steht die verbesserte Haftung zwischen Basislack und Erstlackierung im Vordergrund. Diese soll vor allem für den Einsatz in der OEM-Automobilreparaturlackierung verbessert werden.

Bei der Herstellung wässriger Dispersionen, welche ein mehrstufiges Polymerisat enthalten, kommen üblicherweise Emulgatoren zum Einsatz. Diese sind teilweise für die eine auftretende Haftungsproblematik verantwortlich, da die eingesetzten Emulgatoren üblicherweise aus niedermolekularen Verbindungen bestehen und somit beim Einsatz in wässrigen Beschichtungsmitteln an die Grenzflächen diffundieren können.

Die Haftungsproblematik ist insbesondere dann eklatant, wenn die beschichteten Substrate der Witterung ausgesetzt sind. Die Aufgabe der vorliegenden Erfindung bestand somit auch darin, Polymerisate für Beschichtungen zur Verfügung zu stellen, die auch nachdem sie der Witterung ausgesetzt waren, noch hervorragende Haftungseigenschaften besitzen.

Nach Bewitterung treten oft weitere Probleme, insbesondere Blasenbildung und Quellungen auf. Eine weitere Aufgabe der vorliegenden Erfindung bestand also ferner darin, dass Auftreten von Blasen und Quellungen zu verhindern oder zu reduzieren.

Neben den beschriebenen Haftverbesserungen lag der vorliegenden Erfindung die Aufgabe zugrunde, Polymerisate bereitzustellen, die beim Einsatz in Beschichtungsmitteln verbesserte Eigenschaften hinsichtlich der Lagerungsstabilität der Beschichtungsmittel verglichen mit dem Stand der Technik zeigen.

Eine weitere Aufgabe, die der vorliegenden Erfindung zugrunde lag, war es, ein Polymerisat bereitzustellen, das bei Einsatz in Beschichtungsmitteln die Anforderungen der Automobilserienlackierung hinsichtlich zu erreichendem Flop bei Effekt-Lackierungen, hinsichtlich ausreichend hohem Festkörper zur Erlangung ausreichend hoher Schichtdicken, sowie hinsichtlich einer Viskosität, die eine Verarbeitung mittels elektrostatischer und/oder pneumatischer Applikation erlaubt, erfüllt.

**Lösung der Aufgabe**

Es hat sich gezeigt, dass die oben beschriebenen Aufgaben durch eine wässrige Dispersion enthaltend ein Polymerisat SCS,
hergestellt durch die aufeinanderfolgende radikalische Emulsionspolymerisation von drei voneinander verschiedenen Monomerenmischungen (A), (B) und (C) von olefinisch ungesättigten Monomeren,
dadurch gekennzeichnet, dass
mindestens eine der Monomerenmischungen (A), (B) oder (C) mindestens ein wenigstens eine olefinisch ungesättigte Gruppe aufweisendes Polyurethan (P) enthält,
wobei vor Zumischung des Polyurethans (P) zu wenigstens einer der Monomerenmischungen (A), (B) und (C)
die Monomerenmischung (A) mindestens 50 Gew.-% von Monomeren mit einer Löslichkeit in Wasser von kleiner als 0,5 g/l bei 25 °C enthält und ein Polymerisat (a), welches aus der Mischung (A) hergestellt wird, eine Glasübergangstemperatur von 10 bis 65 °C besitzt,
die Monomerenmischung (B) mindestens ein mehrfach ungesättigtes Monomer enthält und ein Polymerisat (b), welches aus der Mischung (B) hergestellt wird, eine Glasübergangstemperatur von -35 bis 15°C besitzt,
ein Polymerisat (c), welches aus der Monomerenmischung (C) hergestellt wird,
eine Glasübergangstemperatur von -50 bis 15 °C besitzt,
und wobei

i. zunächst die Monomerenmischung (A) polymerisiert wird,
ii. dann die Monomerenmischung (B) in Gegenwart des unter i. hergestellten Polymerisats polymerisiert wird, und
iii. danach die Monomerenmischung (C) in Gegenwart des unter ii. hergestellten Polymerisats polymerisiert wird,

und
das Polyurethan (P) eine Oberflächenflächenspannung im Bereich von 40 mN/m bis 55 mN/m bei 23 °C aufweist;
und
eine Polydispersität d von kleiner 10 besitzt,
gelöst werden.

Die neue wässrige Dispersion enthaltend mindestens ein wie zuvor beschrieben hergestelltes Polymerisat SCS wird in der Folge auch als erfindungsgemäße wässrige Dispersion bezeichnet. Bevorzugte Ausführungsformen der erfindungsgemäßen wässrigen Dispersion gehen aus der folgenden Beschreibung sowie den Unteransprüchen hervor.

Das zuvor beschriebene Polymerisat SCS ist ein sog. Saat-Kern-Schale-Polymerisat, auch bekannt als Seed-Core-Shell-Polymerisat.

Ebenfalls Gegenstand der vorliegenden Erfindung ist ein pigmentierter wässriger Basislack enthaltend die erfindungsgemäße wässrige Dispersion als Bindemittel sowie die Verwendung der erfindungsgemäßen wässrigen Dispersion zur Herstellung von pigmentierten wässrigen Basislacken. Nicht zuletzt betrifft die vorliegende Erfindung ein Verfahren zur Herstellung einer mehrschichtigen Lackierung auf einem Substrat sowie eine nach dem genannten Verfahren hergestellte Mehrschichtlackierung.

## Ausführliche Beschreibung

Zunächst seien einige im Rahmen der vorliegenden Erfindung verwendeten Begriffe erläutert.

Der Begriff "enthaltend" im Sinne der vorliegenden Erfindung im Zusammenhang mit der erfindungsgemäßen wässrigen Dispersion hat in einer bevorzugten Ausführungsform die Bedeutung "bestehend aus". Alle Komponenten können dabei jeweils in ihren nachstehend genannten bevorzugten Ausführungsformen in dem erfindungsgemäßen wässrigen Basislack enthalten sein.

Die im Rahmen der vorliegenden Erfindung anzuwendenden Messmethoden zur Bestimmung bestimmter Kenngrößen sind dem Beispielteil zu entnehmen. Sofern nicht explizit anders angegeben, sind diese Messmethoden zur Bestimmung der jeweiligen Kenngröße einzusetzen.

Unter dem Begriff "Bindemittel" werden im Sinne der vorliegenden Erfindung in Einklang mit der DIN EN ISO 4618 (deutsche Fassung, Datum: März 2007) vorzugsweise die für die Filmbildung verantwortlichen nicht-flüchtigen Anteile ohne Pigmente und Füllstoffe verstanden. Der nicht-flüchtige Anteil kann gemäß DIN EN ISO 3251 (Datum: 1.6.2008) bestimmt werden. Insbesondere werden unter dem Begriff "Bindemittel" die für die Filmbildung verantwortlichen in den jeweiligen Beschichtungsstoffen enthaltenen insbesondere polymeren Harze verstanden. Vom Begriff des "Bindemittels" sind vorzugsweise auch gegebenenfalls in dem jeweiligen Beschichtungsstoff vorhandene Vernetzungsmittel umfasst.

Unter wässrig in Bezug auf die wässrigen Dispersionen ist eine Dispersion zu verstehen, die einen signifikanten Anteil Wasser enthält. Bevorzugt ist "wässrig" in diesem Zusammenhang im Rahmen der vorliegenden Erfindung so zu verstehen, dass die Dispersion einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Besonders bevorzugt beträgt der Anteil an Wasser 40 bis 99 Gew.-%, insbesondere 50 bis 98 Gew.-%, ganz besonders bevorzugt 60 bis 95 Gew.-%, jeweils bezogen auf die Gesamtmenge der enthaltenen Lösemittel.

Der erfindungsgemäße Basislack ist wässrig. Der Ausdruck "wässrig" ist dem Fachmann im Zusammenhang mit Basislacken bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung in Bezug auf Beschichtungsmittel so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Der Begriff (Meth)acrylat soll im Folgenden sowohl Acrylat als auch Methacrylat bezeichnen.

Der Festkörpergehalt ist definitionsgemäß der nicht-flüchtige Anteil einer Zusammensetzung. Die Bestimmung des nicht-flüchtigen Anteils erfolgt gemäß DIN EN ISO 3251 (Datum: Juni 2008). Spezifische Parameter im Rahmen der vorgenannten Norm hinsichtlich der wässrigen Dispersion und hinsichtlich des wässrigen Basislacks ergeben sich aus dem experimentellen Teil.

Für Normen, beispielsweise DIN-Normen, für die keine Version bzw. kein Erscheinungsjahr explizit angegeben ist, gilt die am Einreichungstag gültige Version, oder sofern am Einreichungstag keine gültige Version existiert, die letzte gültige Version der Norm.

## Die wässrige Dispersion

Eine erfindungsgemäße wässrige Dispersion enthält mindestens ein Polymerisat SCS. Bevorzugt enthält eine Dispersion genau ein solches Polymerisat. Die Herstellung des Polymerisats umfasst die aufeinanderfolgende radikalische Emulsionspolymerisation von drei voneinander verschiedenen Mischungen (A), (B) und (C) von olefinisch ungesättigten Monomeren, wobei mindestens eine der Monomerenmischungen (A), (B) oder (C) mindestens ein wenigstens eine olefinisch ungesättigte Gruppe aufweisendes Polyurethan (P) enthält, welches eine Oberflächenflächenspannung im Bereich von 40 mN/m bis 55 mN /m bei 23 °C besitzt und eine Polydispersität d von kleiner 10 aufweist.

Bei der Herstellung des mehrstufigen Polymerisats SCS handelt es sich um eine mehrstufige radikalische Emulsionspolymerisation, wobei i. zunächst die Mischung (A) polymerisiert wird, dann ii. in Anwesenheit des unter i. hergestellten Polymerisats die Mischung (B) polymerisiert wird und weiterhin iii. in Anwesenheit des unter ii. hergestellten Polymerisats die Mischung (C) polymerisiert wird. Alle drei Monomermischungen werden also über eine jeweils separat durchgeführte radikalische Emulsionspolymerisation (das heißt Stufe oder auch Polymerisationsstufe) polymerisiert, wobei diese Stufen aufeinanderfolgend stattfinden. Die Stufen können, zeitlich betrachtet, direkt hintereinander stattfinden. Möglich ist es genauso, dass nach Abschluss einer Stufe die entsprechende Reaktionslösung für eine gewisse Zeitspanne gelagert und/oder in ein anderes Reaktionsgefäß überführt wird und erst dann die nächste Stufe stattfindet.

Bevorzugt umfasst die Herstellung des speziellen mehrstufigen Polymerisats neben der Polymerisation der Monomerenmischungen (A), (B) und (C) keine weiteren Polymerisationsschritte.

Der Begriff der radikalischen Emulsionspolymerisation ist dem Fachmann bekannt und wird zudem in der Folge nochmals genauer erläutert.

Bei einer solchen Polymerisation werden olefinisch ungesättigten Monomere in wässrigem Medium unter Einsatz von mindestens einem wasserlöslichen Initiator und in Anwesenheit mindestens eines Emulgators polymerisiert.

Entsprechende wasserlösliche Initiatoren sind ebenfalls bekannt. Bevorzugt wird der mindestens eine wasserlösliche Initiator ausgewählt aus der Gruppe bestehend aus Kalium-, Natrium- oder Ammoniumperoxodisulfat, Wasserstoffperoxid, tert.-Butylhydroperoxid, 2,2'-Azobis(2-amidoisopropan)dihydrochlorid, 2,2'-Azo- bis-(N,N'-dimethylenisobutyramidin)dihydrochlorid, 2,2'-Azo- bis-(4-cyanopentansäure) sowie Mischungen der vorgenannten Initiatoren, beispielsweise Wasserstoffperoxid und Natriumpersulfat. Ebenfalls der genannten bevorzugten Gruppe zugehörig sind die an sich bekannten Redox-Initiatorsyteme.

Unter Redox-Initiatorsystemen sind insbesondere solche Initiatoren zu verstehen, die mindestens eine peroxidhaltige Verbindung in Kombination mit mindestens einem Redox- Coinitiator, beispielsweise reduzierend wirkenden Schwefelverbindungen wie beispielsweise Bisulfiten, Sulfiten, Thiosulfaten, Dithioniten oder Tetrathionaten von Alkalimetallen und Ammoniumverbindungen, Natriumhydroxymethansulfinat-Dihydrat und/oder Thioharnstoff, enthalten. So kann man Kombinationen von Peroxodisulfaten mit Alkalimetall- oder Ammoniumhydrogensulfiten einsetzen, beispielsweise Ammoniumperoxidisulfat und Ammoniumdisulfit. Das Gewichtsverhältnis von peroxidhaltigen Verbindungen zu den Redox-Coinitiatoren beträgt vorzugsweise 50:1 bis 0,05:1.

In Kombination mit den Initiatoren können zusätzlich Übergangsmetallkatalysatoren eingesetzt werden, wie beispielsweise Eisen-, Nickel-, Kobalt-, Mangan-, Kupfer-, Vanadium, oder Chromsalze, wie Eisen-II-sulfat, Kobalt-II-chlorid, Nickel-II-sulfat, Kupfer- I-chlorid, Mangan-II-acetat, Vanadium-III-acetat, Mangan-II-chlorid. Bezogen auf die Gesamtmasse der bei einer Polymerisation eingesetzten olefinisch ungesättigten Monomere werden diese Übergangsmetallsalze üblicherweise in Mengen von 0,1 bis 1000 ppm eingesetzt. So kann man Kombinationen von Wasserstoffperoxid mit Eisen-II- Salzen einsetzen, wie beispielsweise 0,5 bis 30 Gew.-% Wasserstoffperoxid und 0,1 bis 500 ppm Mohrsches Salz, wobei die Anteilsbereiche jeweils bezogen auf das Gesamtgewicht der in der jeweiligen Polymerisationsstufe eingesetzten Monomere sind.

Die Initiatoren werden bevorzugt in einer Menge von 0,05 bis 20 Gew.-%, bevorzugt 0,05 bis 10, besonders bevorzugt von 0,1 bis 5 Gew.-%, bezogen auf das Gesamtgewicht der in der jeweiligen Polymerisationsstufe eingesetzten Monomere, eingesetzt.

Eine Emulsionspolymerisation verläuft in einem Reaktionsmedium, das Wasser als kontinuierliches Medium und den mindestens einen Emulgator in Form von Micellen enthält. Die Polymerisation wird durch Zerfall des wasserlöslichen Initiators im Wasser gestartet. Die wachsende Polymerkette lagert sich in die Emulgator-Micellen ein und die weitere Polymerisation findet dann in den Micellen statt. Neben den Monomeren, dem mindestens einen wasserlöslichen Initiator und dem mindestens einen Emulgator besteht die Reaktionsmischung also hauptsächlich aus Wasser. Bevorzugt machen die genannten Komponenten, das heißt Monomere, wasserlöslicher Initiator, Emulgator und Wasser, mindestens 95 Gew.-% der Reaktionsmischung aus. Bevorzugt besteht die Reaktionsmischung aus diesen Komponenten.

Der mindestens eine Emulgator wird bevorzugt in einer Menge von 0,1-10 Gew.-%, besonders bevorzugt 0,1-5 Gew.-%, ganz besonders bevorzugt 0,1-3 Gew.-%, jeweils bezogen auf das Gesamtgewicht der in der jeweiligen Polymerisationsstufe eingesetzten Monomere, eingesetzt.

Auch Emulgatoren sind grundsätzlich bekannt. Es können nichtionische oder ionische Emulgatoren, auch zwitterionische, gegebenenfalls auch Mischungen der vorgenannten Emulgatoren, verwendet werden.

Bevorzugte Emulgatoren sind Alkanole mit 10 bis 40 Kohlenstoffatomen, welche gegebenenfalls ethoxyliert und/oder propoxyliert sein können. Sie können unterschiedliche Ethoxylierungs- beziehungsweise Propoxylierungsgrade aufweisen (beispielsweise Addukte, die mit aus 5 bis 50 Moleküleinheiten bestehenden Poly(oxy)ethylen- und/oder Poly(oxy)propylenketten modifiziert sind). Es können auch sulfatierte, sulfonierte oder phosphatierte Derivate der genannten Produkte eingesetzt werden. Solche Derivate werden in der Regel in neutralisierter Form eingesetzt.

Besonders bevorzugte Emulgatoren sind neutralisierte Dialkylsulfobernsteinsäureester oder Alkyldiphenyloxiddisulfonate geeignet, beispielsweise kommerziell erhältlich als EF-800 der Fa.Cytec.

Die Emulsionspolymerisationen werden zweckmäßigerweise bei einer Temperatur von 0 bis 160°C, vorzugsweise von 15 bis 95°C, nochmals bevorzugt 60 bis 95°C durchgeführt.

Dabei wird bevorzugt unter Ausschluss von Sauerstoff gearbeitet, vorzugsweise unter Inertgasatmosphäre. In der Regel wird die Polymerisation bei Normaldruck durchgeführt, jedoch ist auch die Anwendung von niedrigeren Drücken oder höheren Drücken möglich. Insbesondere wenn Polymerisationstemperaturen angewendet werden, die oberhalb des bei Normaldruck bestehenden Siedepunktes von Wasser, der eingesetzten Monomere und/oder der organischen Lösemittel liegen, werden in der Regel höhere Drücke gewählt.

Die einzelnen Polymerisationsstufen bei der Herstellung des mehrstufigen Polymerisats können beispielsweise als sogenannte "verhungernde Polymerisationen" (auch als "starve feed", "starve fed" oder "starved feed"-Polymerisationen bekannt) durchgeführt werden.

Als verhungernde Polymerisation im Sinne der vorliegenden Erfindung wird eine Emulsionspolymerisation angesehen, bei der der Gehalt an freien olefinisch ungesättigten Monomeren in der Reaktionslösung (auch genannt Reaktionsmischung) während der gesamten Reaktionsdauer minimiert wird. Das heißt, dass die Zudosierung der olefinisch ungesättigten Monomere so erfolgt, dass in der Reaktionslösung ein Anteil freier Monomere von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge der in der jeweiligen Polymerisationsstufe eingesetzten Monomere, während der gesamten Reaktionsdauer nicht überschritten wird. Darunter nochmals bevorzugt sind Konzentrationsbereiche der olefinisch ungesättigten Monomere von 0,01 bis 6,0 Gew.-%, bevorzugt 0,02 bis 5,0 Gew.-%, besonders bevorzugt 0,03 bis 4,0 Gew.-%, insbesondere 0,05 bis 3,5 Gew.-%. Beispielsweise kann der höchste während der Reaktion zu detektierende Gewichtsanteil bei 0,5 Gew.-%, 1,0 Gew.-%, 1,5 Gew.-%, 2,0 Gew.-%, 2,5 Gew.-% oder 3,0 Gew.-% liegen, während alle weiteren detektierten Werte dann unterhalb der hier angegebenen Werte liegen. Die Gesamtmenge (auch genannt Gesamtgewicht) der in der jeweiligen Polymerisationsstufe eingesetzten Monomere entspricht für Stufe i. augenscheinlich der Gesamtmenge der Monomerenmischung (A), für Stufe ii. der Gesamtmenge der Monomerenmischung (B) und für Stufe iii. der Gesamtmenge der Monomerenmischung (C).

Die Konzentration der Monomere in der Reaktionslösung kann dabei beispielsweise gaschromatographisch bestimmt werden. Dabei wird eine Probe der Reaktionslösung nach Probenentnahme sofort mit flüssigem Stickstoff abgekühlt und mit 4-Methoxyphenol als Inhibitor versetzt. Im nächsten Schritt wird die Probe in Tetrahydrofuran gelöst und anschließend wird zur Ausfällung des zum Zeitpunkt der Probenentnahme entstandenen Polymerisats n-Pentan hinzugegeben. Dann wird die flüssige Phase (Überstand) gaschromatographisch untersucht, wobei eine polare und eine unpolare Säule zur Bestimmung der Monomere eingesetzt werden und ein Flammenionisationsdetektor verwendet wird. Typische Parameter für die gaschromatographische Bestimmung sind die folgenden: 25 m Silica-Kapillarsäule mit 5% Phenyl- ,1 % Vinyl-Methylpolysiloxan-Phase oder 30 m Silica-Kapillarsäule mit 50% Phenyl 50% Methyl-polysiloxan-Phase, Trägergas Wasserstoff, Splitinjektor 150°C, Ofentemperatur 50 bis 180°C, Flammionisationsdetektor, Detektortemperatur 275°C, interner Standard Isobutylacrylat. Die Messung wird üblicherweise nur mit einer vorgenannten Variante durchgeführt. Deren Auswahl sollte keinen Einfluss auf das Messergebnis haben. Es kann in einigen wenigen Fällen jedoch zu einer Signalüberlagerung kommen, so dass eine quantitative Auswertung nicht möglich ist. In diesem Fall wird die Messung mit der noch nicht verwendeten Variante wiederholt. Die Bestimmung der Konzentration der Monomere erfolgt im Rahmen der vorliegenden Erfindung bevorzugt gaschromatographisch, insbesondere unter Einhaltung der oben genannten Parameter.

Der Anteil der freien Monomere kann auf verschiedene Art und Weisen gesteuert werden.

Eine Möglichkeit den Anteil der freien Monomere gering zu halten ist es, die Dosiergeschwindigkeit der Mischung der olefinisch ungesättigten Monomere zur eigentlichen Reaktionslösung, in der die Monomere mit dem Initiator in Kontakt kommen, sehr niedrig zu wählen. Wenn die Zudosiergeschwindigkeit so niedrig ist, dass alle Monomere praktisch sofort reagieren können, wenn sie in der Reaktionslösung sind, kann sichergestellt werden, dass der Anteil der freien Monomere minimiert wird.

Neben der Dosiergeschwindigkeit ist es wichtig, dass immer ausreichend Radikale in der Reaktionslösung vorhanden sind, so dass die zudosierten Monomere jeweils möglichst schnell zur Reaktion gebracht werden können. Auf diese Weise ist ein weiteres Kettenwachstum des Polymerisats garantiert und der Anteil an freiem Monomer wird gering gehalten.

Dazu sind die Reaktionsbedingungen bevorzugt so zu wählen, dass mit dem Initiatorzulauf schon vor Beginn der Dosierung der olefinisch ungesättigten Monomeren begonnen wird. Bevorzugt wird mit der Dosierung mindestens 5 Minuten vorher begonnen, besonders bevorzugt mindestens 10 Minuten vorher. Bevorzugt wird mindestens 10 Gew.-% des Initiators, besonders bevorzugt mindestens 20 Gew.-%, ganz besonders bevorzugt mindestens 30 Gew.-% des Initiators, jeweils bezogen auf die Gesamtmenge an Initiator, vor Beginn der Dosierung der olefinisch ungesättigten Monomeren zugegeben.

Es ist bevorzugt eine Temperatur zu wählen, die einen konstanten Zerfall des Initiators ermöglicht.

Die Initiatormenge ist ebenfalls ein wichtiger Faktor für das ausreichende Vorhandensein von Radikalen in der Reaktionslösung. Die Menge an Initiator ist so zu wählen, dass zu jeder Zeit ausreichend Radikale zur Verfügung stehen, so dass die zudosierten Monomere reagieren können. Wird die Menge an Initiator erhöht, können auch größere Mengen an Monomeren zur gleichen Zeit zur Reaktion gebracht werden.

Ein weiterer Faktor, der die Reaktionsgeschwindigkeit bestimmt, ist die Reaktivität der Monomere.

Die Kontrolle des Anteils der freien Monomere kann also durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen dem Ziel, die Konzentration der freien Monomere unter den oben genannten Grenzen zu halten.

Zu jedem Zeitpunkt der Reaktion kann die Konzentration der freien Monomere gaschromatographisch, wie

oben beschrieben, bestimmt werden.

Sollte bei dieser Analyse eine Konzentration an freien Monomeren bestimmt werden, die nahe an den Grenzwert für die verhungernde Polymerisation kommt, beispielsweise aufgrund geringer Anteile von hoch reaktiven olefinisch ungesättigten Monomeren, können die oben genannten Parameter zur Steuerung der Reaktion genutzt werden. Es kann in diesem Fall beispielsweise die Dosiergeschwindigkeit der Monomere verringert oder die Menge an Initiator erhöht werden

Im Rahmen der vorliegenden Erfindung ist es bevorzugt, dass die Polymerisationsstufen ii. und iii. unter verhungernden Bedingungen durchgeführt werden. Dies hat den Vorteil, dass die Bildung neuer Partikelnuklei im Rahmen dieser beiden Polymerisationsstufen auf effektive Weise minimiert wird. Stattdessen gelingt es, die nach Stufe i. bestehenden Partikel (daher nachstehend auch Saat genannt) in Stufe ii. durch die Polymerisation der Monomerenmischung B weiterwachsen zu lassen (daher nachstehend auch Kern genannt). Ebenso gelingt es, die nach Stufe ii. bestehenden Partikel (nachstehend auch Polymerisat umfassend Saat und Kern genannt) in Stufe iii. durch die Polymerisation der Monomerenmischung C weiterwachsen zu lassen (daher nachstehend auch Schale genannt), sodass schließlich ein Polymerisat umfassend Partikel enthaltend Saat, Kern und Schale resultiert.

Selbstverständlich kann auch die Stufe i. unter verhungernden Bedingungen durchgeführt werden.

Es ist erfindungswesentlich, dass mindestens eine der Monomerenmischungen (A), (B) und (C) bei der aufeinanderfolgenden radikalische Emulsionspolymerisation zur Herstellung der wässrigen Dispersion enthaltend das Polymerisat SCS mindestens ein wenigstens eine olefinisch ungesättigte Gruppe aufweisendes Polyurethan (P) enthält, wobei das Polyurethan (P) eine Oberflächenspannung im Bereich von 40 mN/m bis 55 mN/m bei 23 °C aufweist und eine Polydispersität d von kleiner 10 besitzt. Die Oberflächenspannung wird vorzugsweise mit Hilfe der Ringmethode gemäß DIN EN 14210:2004-03 ermittelt, wobei die gemessenen Werte der Oberflächenspannung nach DIN EN 14370:2014-11 korrigiert werden. Die Messung der Oberflächenspannung erfolgt bei einer Temperatur von 23 °C.

In der Folge wird zunächst auf grundsätzlich im Rahmen dieser Erfindung einsetzbare Polyurethane (P) eingegangen. Spezifisch bevorzugte Ausführungsformen werden danach beschrieben.

Das mindestens eine wenigstens eine olefinisch ungesättigte Gruppe aufweisende Polyurethan (P) weist eine Oberflächenspannung im Bereich von 40 mN/m bis 55 mN/m bei 23 °C auf. Es ist weiterhin bevorzugt, dass das Polyurethan eine Oberflächenspannung im Bereich von 40,05 mN/m bis 50 mN/m bei 23 °C besitzt. Der Begriff der Oberflächenspannung ist dem Fachmann geläufig und bezeichnet eine Eigenschaft zwischen der Oberfläche (Grenzfläche) zwischen einer Flüssigkeit und einem Gas, wie etwa der Luft.

Es ist weiterhin erfindungswesentlich, dass das mindestens eine wenigstens eine olefinisch ungesättigte Gruppe aufweisende Polyurethan (P) eine Polydispersität d von kleiner 10 aufweist. Es ist weiterhin bevorzugt, dass das Polyurethan (P) eine Polydispersität im Bereich von 2 bis 7, weiterhin bevorzugt im Bereich von 3 bis 6 aufweist.

Der Begriff der Polydispersität ist dem Fachmann geläufig. Dieser Begriff beschreibt die Breite einer Molekulargewichtsverteilung und wird durch den Quotienten aus dem gewichtsmittleren Molekulargewicht $M_w$ und dem zahlenmittleren Molekulargewicht $M_n$ berechnet. Aus dieser Definition ergibt sich automatisch eine Untergrenze für den Wert d, die definitionsgemäß bei einem Wert von größer 1 liegt. Bei einem Wert von 1 liegt ein monodisperses Polymer vor. Die Bestimmung des gewichtsmittleren und des zahlenmittleren Molekulargewichts erfolgt mittels Gel-Permeations-Chromatographie (GPC) gemäß DIN55672-1 (März 2016).

Das Polyurethan (P) weist wenigstens eine olefinisch ungesättigte Gruppe auf. Die wenigstens eine olefinisch ungesättigte Gruppe sorgt dafür, dass das Polyurethan (P) bei entsprechender Beimischung zu mindestens einer der Monomerenmischungen (A), (B) oder (C) in der Emulsionspolymerisation in die Saat bzw. den Kern bzw. die Schale einpolymerisiert wird.

Es ist bevorzugt, dass das Polyurethan (P) frei von NCO-Gruppen ist. Im Sinne dieser Erfindung bedeutet dies, dass der Gehalt an NCO-Gruppen weniger als 0,01 Gew.-% beträgt.

Es ist bevorzugt, dass das Polyurethan (P) genau eine olefinisch ungesättigte Gruppe aufweist. Es ist jedoch möglich, dass in der Reaktionsführung zur Synthese des Polyurethans (P) untergeordnete Nebenreaktionen auftreten, die dazu führen, dass das Polyurethan (P) mehr als eine olefinisch ungesättigte Gruppe aufweist. Es ist daher bevorzugt, Polyurethane (P) einzusetzen, die zu mindestens 90 Gew.-%, bevorzugt zu mindestens 95 Gew.-%, ganz besonders bevorzugt zu mindestens 98 Gew.-% genau eine olefinisch ungesättigte Gruppe aufweisen.

Das Polyurethan (P) wird vorzugsweise hergestellt durch Reaktion wenigstens eines Polyesterdiols und wenigstens eines Polyisocyanats gefolgt von einer Kettenverlängerungsreaktion mit mindestens einer wenigstens eine olefinisch ungesättigte Gruppe enthaltenden Verbindung, welche mindestens eine gegenüber Isocyanatgruppen reaktive funktionelle Gruppe aufweist.

Das wenigstens eine vorzugsweise eingesetzte Polyesterdiol wird bevorzugt durch eine Veresterungsreaktion mindestens einer Polycarbonsäure bzw. deren Ester oder Anhydride mit wenigstens einem Polyol hergestellt. Die Herstellung des Polyesterdiols weist keine Besonderheiten auf. Üblicherweise erfolgt die Veresterung mit Hilfe eines Wasserabscheiders.

Zur Synthese des Polyesterdiols ist bevorzugt, dass zumindest ein geringer molarer Überschuss des Polyols

im Verhältnis zur Polycarbonsäure eingesetzt wird. In diesem Zusammenhang ist es besonders bevorzugt, dass das Verhältnis der Carbonsäuregruppen der Polycarbonsäure zu den Alkoholgruppen des Polyols 1:1,05 bis 1:2 beträgt. Weiterhin bevorzugt liegt das Verhältnis bei 1:1,1 bis 1:2.

Bevorzugt handelt es sich bei der Polycarbonsäure um eine aliphatisch gesättigte oder aromatische Carbonsäure, welche wiederum bevorzugt eine Dicarbonsäure ist. Beispiele geeigneter aliphatisch gesättigter Dicarbonsäuren sind Ethandisäure (Oxalsäure), Propandissäure (Malonsäure), Butandisäure (Bernsteinsäure), Pentandisäure (Glutarsäure), Hexandisäure (Adipinsäure), Heptandisäure (Pimelinsäure), Octandisäure (Suberinsäure), Nonandisäure (Azaleinsäure), Decandisäure (Sebacinsäure), Maleinsäure und Hexahydrophthalsäure.

Beispiele geeigneter aromatischer Dicarbonsäuren sind 1,2-Benzoldicarbonsäure (Phthalsäure), 1,3-Benzoldicarbonsäure (Isophthalsäure) und 1,4-Benzoldicarbonsäure (Terephthalsäure). Es können auch die entsprechenden Anhydride verwendet werden, sofern diese existieren.

Es ist weiterhin möglich, dass als Polycarbonsäure Dimerfettsäuren eingesetzt werden. Als Dimerfettsäuren (seit langem auch bekannt als dimerisierte Fettsäuren oder Dimersäuren) werden allgemein und insbesondere im Rahmen der vorliegenden Erfindung Gemische bezeichnet, die durch Oligomerisierung von ungesättigten Fettsäuren hergestellt werden. Sie sind beispielsweise herstellbar durch katalytische Dimerisierung von pflanzlichen, ungesättigten Fettsäuren, wobei als Ausgangsstoffe insbesondere ungesättigte $C_{12}$- bis $C_{22}$-Fettsäuren eingesetzt werden. Die Verknüpfung verläuft vornehmlich nach dem Diels-Alder-Typ und es resultieren, je nach Zahl und Lage der Doppelbindungen der zur Herstellung der Dimerfettsäuren eingesetzten Fettsäuren, Gemische aus vornehmlich dimeren Produkten, die zwischen den Carboxylgruppen cycloaliphatische, linear-aliphatische, verzweigt aliphatische und auch $C_6$-aromatische Kohlenwasserstoffgruppen aufweisen. Je nach Mechanismus und/oder gegebenenfalls nachträglicher Hydrierung können die aliphatischen Reste gesättigt oder ungesättigt sein und auch der Anteil von aromatischen Gruppen kann variieren. Die Reste zwischen den Carbonsäuregruppen enthalten dann beispielsweise 24 bis 44 Kohlenstoffatome. Bevorzugt werden zur Herstellung Fettsäuren mit 18 Kohlenstoffatomen eingesetzt, sodass das dimere Produkt also 36 Kohlenstoffatome aufweist. Vorzugsweise weisen die Reste, welche die Carboxylgruppen der Dimerfettsäuren verbinden, keine ungesättigten Bindungen und keine aromatischen Kohlenwasserstoffreste auf.
Im Sinne der vorliegenden Erfindung werden bei der Herstellung der Dimerfettsäuren also bevorzugt $C_{18}$-Fettsäuren eingesetzt. Besonders bevorzugt werden Linolen-, Linol- und/oder Ölsäure eingesetzt.

In Abhängigkeit von der Reaktionsführung entstehen bei der oben bezeichneten Oligomerisierung Gemische, die hauptsächlich dimere, aber auch trimere Moleküle sowie monomere Moleküle und sonstige Nebenprodukte enthält. Üblicherweise wird destillativ gereinigt. Handelsübliche Dimerfettsäuren enthalten im Allgemeinen mindestens 80 Gew.-% dimere Moleküle, bis zu 19 Gew.-% trimere Moleküle und maximal 1 Gew.-% monomerer Moleküle und sonstiger Nebenprodukte.

Es ist bevorzugt, Dimerfettsäuren einzusetzen, die zu mindestens 90 Gew.-%, bevorzugt zu mindestens 95 Gew.-%, ganz besonders bevorzugt zu mindestens 98 Gew.-% aus dimeren Fettsäuremolekülen bestehen.

Im Sinne der vorliegenden Erfindung ist es bevorzugt, Dimerfettsäuren einzusetzen, die zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten bestehen. Es ist besonders bevorzugt, Dimerfettsäuren einzusetzen, die zu 95 bis 98 Gew.-% aus dimeren Molekülen, weniger als 5 Gew.-% aus trimeren Molekülen und zu weniger als 1 Gew.-% aus monomeren Molekülen und sonstigen Nebenprodukten bestehen. Ebenfalls besonders bevorzugt werden Dimerfettsäuren eingesetzt, die zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten bestehen. Die Bestimmung der Anteile von monomeren, dimeren und trimeren Molekülen sowie sonstigen Nebenprodukten in den Dimerfettsäuren kann beispielsweise mittels Gaschromatografie (GC) erfolgen. Dabei werden die Dimerfettsäuren vor der GC-Analyse über die Bortrifluorid-Methode zu den entsprechenden Methylestern umgesetzt (vergleiche DIN EN ISO 5509) und dann mittels GC analysiert.

Als grundlegendes Kennzeichen für "Dimerfettsäuren" gilt im Rahmen der vorliegenden Erfindung also, dass deren Herstellung die Oligomerisierung von ungesättigten Fettsäuren umfasst. Bei dieser Oligomerisierung entstehen vornehmlich, das heißt bevorzugt zu mindestens 80 Gew.-%, besonders bevorzugt zu mindestens 90 Gew.-%, ganz besonders bevorzugt zu mindestens 95 Gew.-% und insbesondere zu mindestens 98 Gew.-% dimere Produkte. Die Tatsache, dass bei der Oligomerisierung überwiegend dimere Produkte entstehen, die also genau zwei Fettsäuremoleküle enthalten, rechtfertigt diese ohnehin gängige Benennung.

Die einzusetzenden Dimerfettsäuren sind als Handelsprodukte zu erhalten. Zu nennen sind beispielsweise Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Croda, Empol 1008, Empol 1061 und Empol 1062 der Firma BASF SE sowie Unidyme 10 und Unidyme TI der Firma Arizona Chemical.

In der Veresterungsreaktion zur Herstellung des bevorzugten Polyesterdiols können verschiedene Polyole zum Einsatz kommen. Dabei ist insbesondere der Einsatz von Diolen bevorzugt, wobei weiterhin bevorzugt aliphatische Diole mit einem Molekulargewicht von 62 bis 500 g/mol eingesetzt werden.

Bei den Diolen kann es sich um cycloaliphatische, bevorzugt aber um acyclische aliphatische Verbindungen handeln, die zwei Hydroxylgruppen als Substituenten tragen.

Beispiele geeigneter Diole sind Ethylenglykol, Neopentylglykol, 1,2-Propandiol, 2,2,-Dimethyl-1,3-Propandiol, 1,4- Butandiol, 1,3-Butandiol, 1,5,-Pentandiol, 2,2,4-Trimethyl-1,3-pentandiol, 1,6- Hexandiol, 1,4-Cyclohexandimethanol und 1,2-Cyclohexandimethanol.

Ferner kommen als Polyole auch Polyether der allgemeinen Strukturformel

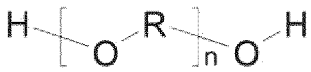

in Betracht, wobei es sich bei R um einen $C_3$ bis $C_6$-Alkylrest handelt. Der Index n ist jeweils so zu wählen, dass der besagte Polyether ein zahlenmittleres Molekulargewicht von 450 bis 2200 g/mol besitzt. Besonders bevorzugt besitzt er ein zahlenmittleres Molekulargewicht von 700 bis 1400 g/mol und ganz besonders bevorzugt von 800 bis 1200 g/mol.

In dem einzusetzenden Polyether können alle n Reste R gleich sein. Ebenso ist es aber auch möglich, das unterschiedliche Arten von Resten R vorhanden sind. Bevorzugt sind alle Reste R gleich.

Bei R handelt es sich bevorzugt um einen $C_3$- oder einen $C_4$-Alkylenrest. Besonders bevorzugt handelt es sich um einen iso-Propylen- oder einen Tetramethylenrest.

Ganz besonders bevorzugt handelt es sich bei dem erfindungsgemäß einzusetzenden Polyether um Polypropylenglycol oder um Polytetrahydrofuran.

Zur weiteren Umsetzung des durch Veresterungsreaktion erhaltenen Polyesterdiols kommen grundsätzlich alle der üblichen und bekannten, auf dem Lackgebiet verwendeten Polyisocyanate in Betracht.

Beispiele geeigneter Polyisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethylcyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1- yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Dicyclohexylmethan-4,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, m-Tetramethylxylylendiisocyananat (= 1,3-Bis-(2-isocyanatoprop-2-yl)-benzol oder Toluylendiisocyanat.

Es können auch Isocyanurat-, Biuret-, Allophanat-, Iminooxadiazindon-, Urethan-, Harnstoff-, Carbodiimid und/oder Uretdiongruppen aufweisende Polyisocyanate verwendet werden.

Bevorzugt werden als Polyisocyanate gesättigte Isocyanate eingesetzt, besonders bevorzugt sind die Polyisocyanate ausgewählt aus der Gruppe von Isophorondiisocyanat und m-Tetramethylxylylendiisocyananat.

Ferner ist es bevorzugt, dass die Umsetzung der Polyesterdiole mit Polyisocyanaten in Gegenwart von Verbindungen zur Einführung weiterer Carboxylgruppen in das Polyurethan (P) durchgeführt wird. Dazu können beispielsweise $\alpha,\alpha$ Dimethylolalkansäuren wie 2,2-Dimethylolessigsäure, 2,2-Dimethylolpropionsäure (DMPA), 2,2-Dimethylolbuttersäure und 2,2 Dimethylolpentansäure verwendet werden, wobei insbesondere 2,2-Dimethylolpropionsäure bevorzugt ist.

Das wenigstens eine vorzugsweise eingesetzte Polyesterdiol wird mit dem wenigstens einen Polyisocyanat, vorzugsweise in Gegenwart von DMPA zu einem Isocyanatgruppen aufweisenden Zwischenprodukt umgesetzt. Die Umsetzung erfolgt dabei nach den gut bekannten Verfahren der Polyurethanchemie (vgl. z.B. Kunststoff-Handbuch, Band 7:Polyurethane, hrsg. von Dr. G.Oertel, Carl Hanser Verlag München-Wien 1983). Die Umsetzung kann lösemittelfrei durchgeführt werden, bevorzugt wird sie aber in Lösemitteln durchgeführt, die gegenüber Isocyanatgruppen inert und mit Wasser mischbar sind. Vorteilhaft werden Lösemittel eingesetzt, die neben den oben beschriebenen Eigenschaften auch noch gute Löser für die hergestellten Polyurethane sind und sich aus wässrigen Mischungen leicht abtrennen lassen. Besonders gut geeignete Lösemittel sind Aceton und Methylethylketon.

Die einzusetzenden Anteile des Polyesterdiols, des Polyisocyanats und des DMPA sind bevorzugt so zu wählen, dass aus dem Gesamtverhältnis aller Hydroxylgruppen aus dem Polyesterdiol und dem DMPA zu den Isocyanatgruppen des Polyisocyanats ein Reaktionsprodukt entsteht, welches einen Restgehalt an Isocyanatgruppen im Bereich von 0,08 bis 0,1 Gew.-% aufweist.

Im Anschluss an die vorgenannte Reaktion erfolgt vorzugsweise eine Umsetzung des so erhaltenen isocyanatgruppenhaltigen Zwischenproduktes mit mindestens einer wenigstens eine olefinisch ungesättigte Gruppe aufweisenden Verbindung, welche mindestens eine gegenüber Isocyanatgruppen reaktive funktionelle Gruppe aufweist. Die gegenüber Isocyanatgruppen reaktive Gruppe wird insbesondere abgebildet durch Hydroxylgruppen sowie durch primäre und sekundäre Amine, wobei insbesondere Hydroxylgruppen bevorzugt sind. Es ist ganz besonders bevorzugt, dass die eingesetzte Verbindung genau eine olefinisch ungesättigte Gruppe aufweist.

Bevorzugt werden als Alkohole in der sogenannten Kettenverlängerungsreaktion (meth)acrylat-basierte einfach olefinisch ungesättigte Alkohole, Allylgruppen-haltige einfach olefinisch ungesättigte Alkohole und weitere Vinylgruppen-haltige einfach olefinisch ungesättigte Alkohole eingesetzt.

Besonders geeignet sind einfach ungesättigte Ester der (Meth)acrylsäure mit einem mit einer Hydroxylgruppe substituierten gesättigt-aliphatischen Rest, wie insbesondere 2- Hydroxyethyl(meth)acrylat, 2-Hydroxypropyl(meth)acrylat, 3-Hydroxypropyl (meth)acrylat, 3-Hydroxybutyl(meth)acrylat und 4-Hydroxybutyl(meth)acrylat, wobei 2- Hydroxyethyl(meth)acrylat ganz besonders bevorzugt ist.

Das Polyurethan (P) kann jeder der Monomerenmischungen (A), (B) oder (C) bei der Emulsionspolymerisation zugemischt werden. Dabei ist es möglich, dass das Polyurethan lediglich einer der Monomerenmischungen (A), (B) oder (C) zugemischt wird. Erfolgt die Zumischung zur Monomerenmischung (A) wird das Polyurethan in die Saat des Polymerisats SCS einpolymerisiert. Erfolgt die Zumischung zur Monomerenmischung (B) erfolgt der Einbau des Polyurethans (P) in den Kern des Polymerisats SCS. Bei Zumischung des Polyurethans (P) zur Monomerenmischung (C) erfolgt die Polymerisation in die Schale des Polymerisats SCS. Es ist aber auch möglich, dass das Polyurethan (P) nicht nur einer der Monomerenmischungen beigemischt wird, sondern auch, dass zwei der drei Monomerenmischungen (A), (B) und (C) ein Polyurethan (P) enthalten. Ferner ist auch möglich, dass allen drei Monomerenmischungen (A), (B) und (C) ein Polyurethan (P) zugemischt wird. In diesem Fall erfolgt die Polymerisation des Polyurethans (P) sowohl in die Saat, als auch in den Kern, als auch in die Schale des Polymerisats SCS.

Prinzipiell kann das Polyurethan (P) den Mischungen (A), (B) und/oder (C) in einem sehr breiten gewichtsprozentualen Anteilsbereich zugesetzt werden. Es ist dabei bevorzugt, dass der Anteil des Polyurethans (P) an der jeweiligen Mischungen (A), (B) oder (C) in einem Bereich von 0,1 bis 10,0 Gew.-% bezogen auf den Festkörpergehalt der jeweiligen Monomerenmischung (A), (B) oder (C) ausmacht.

Die Zugabe des Polyurethans (P) zu den Monomerenmischungen (A), (B) oder (C) bewirkt, dass dieses als Comonomer einpolymerisiert wird und das Polyurethan (P) zusätzlich eine emulgierende Wirkung hat. Um eine ausreichende Emulgatorwirkung zu erzielen, ist allerdings zu unterscheiden, ob das Polyurethan (P) der Monomerenmischung (A) oder den Monomerenmischungen (B) bzw. (C) beigemischt wird. Wird das Polyurethan (P) der Monomerenmischung (A) zugesetzt werden relativ große Mengen des Polyurethans (P) benötigt, um eine ausreichende Micellenbildung zu Beginn der Emulsionspolymerisation zu gewährleisten. Eine ausreichende Micellenbildung ist notwendig, um die gewünschte Partikelgröße steuern zu können. Es ist daher bevorzugt, dass der Anteil des Polyurethans an der Monomerenmischung (A) 0,1 bis 10 Gew.-%, bevorzugt 1 bis 9 Gew.-%, weiterhin bevorzugt 5 bis 8 Gew.-% bezogen auf den Festkörpergehalt der Monomerenmischung (A) beträgt.

Bei der Beimischung des Polyurethans (P) zu den Monomerenmischungen (B) und/oder (C) werden generell geringere Mengen des Polyurethans (P) benötigt, um eine ausreichende Emulgatorwirkung zu erzielen. Wird das Polyurethan (P) der Monomerenmischung (B) und/oder (C) beigemischt, ist es daher bevorzugt, dass der Anteil des Polyurethans (P) von 0,1 bis 1,0 Gew.-%, bevorzugt 0,15 bis 0,8 Gew.-%, weiter bevorzugt 0,2 bis 0,6 Gew.% bezogen auf den Festkörpergehalt der jeweiligen Monomerenmischung (B) oder (C) beträgt. Es ist aber auch möglich, insbesondere in Bezug auf die Monomerenmischungen (B) und (C), dass höhere Anteile des Polyurethans (P) den Monomerenmischungen beigemischt werden.

Da das Polyurethan (P) allen drei Monomerenmischungen (A), (B) und (C) beigemischt werden kann, ist es bevorzugt, dass der Anteil des Polyurethans (P) von 0,05 bis 1,8 Gew.-%, bevorzugt von 0,08 bis 1,6 Gew.-% und weiterhin bevorzugt von 0,1 bis 1,5 Gew.-% bezogen auf den Festkörpergehalt der wässrigen Dispersion beträgt.

Bei den Mischungen (A), (B) und (C) handelt es sich um Mischungen von olefinisch ungesättigten Monomeren. Im Rahmen dieser Erfindung wird jeweils zwischen den Monomerenmischungen (A), (B) und (C) sowie den entsprechenden Monomerenmischungen enthaltend mindestens ein wenigstens eine olefinisch ungesättigte Gruppe aufweisendes Polyurethan differenziert. Die Monomerenmischungen (A), (B) und (C) bzw. die aus diesen Monomerenmischungen hergestellten Polymerisate (a), (b) und (c) weisen vor Zumischung des Polyurethans (P) die nachfolgend beschriebenen Charakteristika auf.

Prinzipiell geeignete olefinisch ungesättigte Monomere können einfach oder mehrfach olefinisch ungesättigt sein.

In der Folge werden zunächst grundsätzlich einsetzbare und im Rahmen aller Mischungen (A), (B) und (C) geeignete und gegebenenfalls bevorzugte Monomere beschrieben. Auf spezifische bevorzugte Ausführungsformen der einzelnen Mischungen wird danach eingegangen. Es ist bevorzugt, dass die Mischungen (A), (B) und (C) jeweils aus den entsprechend nachfolgend beschriebenen Monomeren bestehen.

Es ist bevorzugt, dass die Monomerenmischungen (A), (B) und (C) keine Makromonomere enthalten. Der

Begriff des Makromonomers ist dem Fachmann bekannt. Hierbei handelt es sich um Polymere oder Oligomere, welche eine reaktive funktionelle Gruppe aufweisen und als Monomer fungieren. Dies führt dazu, dass das über das Makromonomer eine polymere oder oligomere Seitenkette in das Zielpolymer eingeführt wird.

Beispiele geeigneter einfach olefinisch ungesättigter Monomere umfassen insbesondere (meth)acrylat-basierte einfach olefinisch ungesättigte Monomere, Allylgruppen-haltige einfach olefinisch ungesättigte Monomere und weitere Vinylgruppen-haltige einfach olefinisch ungesättigte Monomere wie beispielsweise vinylaromatische Monomere. Der Begriff (meth)acryl beziehungsweise (Meth)acrylat umfasst im Rahmen der vorliegenden Erfindung sowohl Methacrylate als auch Acrylate. Bevorzugt werden jedenfalls, aber nicht zwingend ausschließlich, (meth)acrylat-basierte einfach olefinisch ungesättigte Monomere eingesetzt

Bei den (meth)acrylat-basierten, einfach olefinisch ungesättigten Monomeren kann es sich beispielsweise um (Meth)acrylsäure und Ester, Nitrile oder Amide der (Meth)acrylsäure handeln.

Bevorzugt sind Ester der (Meth)acrylsäure, mit einem Rest R, der nicht olefinisch ungesättigt ist.

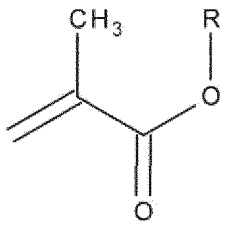

bzw.

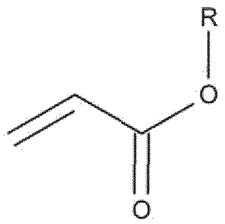

Der Rest R kann gesättigt-aliphatisch, aromatisch oder gemischt gesättigt-aliphatisch- aromatisch sein. Als aliphatisch werden im Rahmen der vorliegenden Erfindung alle organischen Reste bezeichnet, die nicht aromatisch sind. Bevorzugt ist der Rest R aliphatisch.

Der gesättigt-aliphatische Rest kann ein reiner Kohlenwasserstoffrest sein oder er kann Heteroatome aus verbrückenden Gruppen (beispielsweise Sauerstoff aus Ether- oder Estergruppen) enthalten und/oder mit funktionellen Gruppen enthaltend Heteroatome (beispielsweise Alkoholgruppen) substituiert sein. Im Rahmen der vorliegenden Erfindung wird also klar unterschieden zwischen verbrückenden Gruppen enthaltend Heteroatome und funktionellen Gruppen enthaltend Heteroatome (das heißt endständigen funktionellen Gruppen enthaltend Heteroatome).

Bevorzugt werden jedenfalls, aber nicht zwingend ausschließlich, Monomere eingesetzt, in denen der gesättigt-aliphatische Rest R ein reiner Kohlenwasserstoffrest (Alkylrest) ist, also keine Heteroatome aus verbrückenden Gruppen (beispielsweise Sauerstoff aus Ethergruppen) enthält und auch nicht mit funktionellen Gruppen (beispielsweise Alkoholgruppen) substituiert ist.

Für den Fall, dass R ein Alkylrest ist, kann es sich beispielsweise um einen linearen, verzweigten oder cyclischen Alkylrest handeln. Natürlich kann ein solcher Alkylrest auch lineare und cyclische beziehungsweise verzweigte und cyclische Strukturanteile aufweisen. Bevorzugt hat der Alkylrest 1 bis 20, besonders bevorzugt 1 bis 10 Kohlenstoffatome.

Besonders bevorzugte einfach ungesättigte Ester der (Meth)acrylsäure mit einem Alkylrest sind Methyl(meth)acrylat, Ethyl(meth)acrylat, Propyl(meth)acrylat, isopropyl(meth)acrylat, n-Butyl(meth)acrylat, Isobutyl(meth)acrylat, tert-Butyl(meth)acrylat, Amyl(meth)acrylat, Hexyl(meth)acrylat, Ethylhexyl(meth)acrylat, 3,3,5-Trimethylhexyl(meth)acrylat, Stearyl(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat wobei n- und tert-Butyl(meth)acrylat und Methylmethacrylat ganz besonders bevorzugt sind.

Weitere geeignete Reste R sind beispielsweise gesättigt-aliphatische Reste, die funktionelle Gruppen enthaltend Heteroatome (beispielsweise Alkoholgruppen oder Phosphorsäureestergruppen) umfassen.

Geeignete einfach ungesättigte Ester der (Meth)acrylsäure mit einem mit einer oder mehreren Hydroxylgruppen substituierten gesättigt-aliphatischen Rest sind 2-Hydroxyethyl(meth)acrylat, 2-Hydroxypropyl(meth)acrylat, 3-Hydroxypropyl (meth)acrylat, 3-Hydroxybutyl(meth)acrylat und 4-Hydroxybutyl(meth)acrylat, wobei 2- Hydroxyethyl(meth)acrylat ganz besonders bevorzugt ist.

Geeignete einfach ungesättigte Ester der (Meth)acrylsäure mit Phosphorsäureestergruppen sind beispielsweise Phosphorsäureester von Polypropyleneglycolmonomethacrylat, wie das kommerziell erhältliche Sipomer PAM 200 der Firma Rhodia.

Bei möglichen weiteren einfach olefinisch ungesättigten Monomeren enthaltend eine Vinylgruppe, handelt es sich um Monomeren, die verschieden sind von den oben beschriebenen Acrylat-basierten Monomeren mit einem Rest R' an der Vinylgruppe, der nicht olefinisch ungesättigt ist.

Der Rest R' kann gesättigt-aliphatisch, aromatisch oder gemischt gesättigt-aliphatisch- aromatisch sein, wobei aromatische und gemischt gesättigt-aliphatischaromatische Reste, in denen die aliphatischen Anteile Alkylgruppen darstellen, bevorzugt sind.

Besonders bevorzugte vinylische, olefinisch ungesättigte Monomere sind vinylaromatische Kohlenwasserstoffe, insbesondere Vinyltoluol, alpha-Methylstyrol und insbesondere Styrol, oder

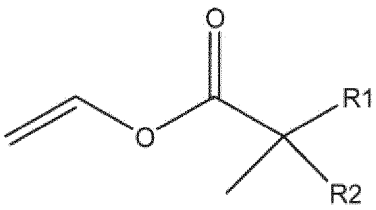

wobei die Reste R1 und R2 Alkylreste mit insgesamt 7 Kohlenstoffatomen sind. Letztgenannte Monomere sind unter dem Namen VeoVa 10 bei der Firma Momentive kommerziell erhältlich.

Weitere grundsätzlich geeignete Monomere sind olefinisch ungesättigte Monomere wie Acrylnitril, Methacrylnitril, Acrylamid, Methacrylamid, N-Dimethylacrylamid, Vinylacetat, Vinylpropionat, Vinylchlorid, N-Vinylpyrrolidon, N-Vinylcaprolactam, N-Vinylformamid, N- Vinylimidazol, N-Vinyl-2-Methylimidazolin sowie weitere ungesättigte alpha-beta-Carbonsäuren.

Beispiele geeigneter mehrfach olefinisch ungesättigter Monomere umfassen Ester der (Meth)acrylsäure mit einem olefinisch ungesättigten Rest R" und Allylether von mono- oder mehrwertigen Alkoholen. Bei dem Rest R" kann es sich um einen Allylrest handeln oder um einen (Meth)acrylsäureest.

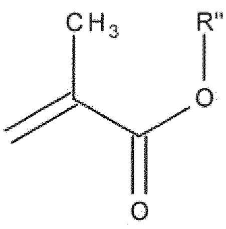

bzw.

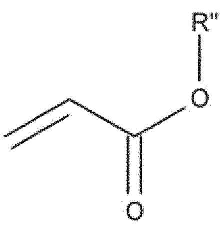

Bevorzugte mehrfach olefinisch ungesättigte Monomere umfassen Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi-(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykol-di(meth)acrylat, Tripropylenglykoldi(meth)acrylat, Hexandioldi(meth)acrylat und Allyl(meth)acrylat.

Darüber hinaus umfassen bevorzugte mehrfach olefinisch ungesättigte Verbindungen Acrylsäure- und Methacrylsäureester von Alkoholen mit mehr als zwei OH-Gruppen, wie zum Beispiel Trimethylolpropantri(meth)acrylat oder Glycerintri(meth)acrylat, aber auch Trimethylolpropandi(meth)acrylatmonoallylether, Trimethylolpropan(meth)acrylat-diallylether, Pentaerythrittri(meth)acrylatmonoallylether, Pentaerythritdi(meth)acrylat- diallylether, Pentaerythrit(meth)acrylattriallylether, Triallylsaccharose, und Pentaallylsaccharose.

Möglich sind auch Allylether von mono- oder mehrwertigen Alkoholen, wie beispielsweise Trimethylolpropanmonoallylether.

Sofern eingesetzt sind als mehrfach olefinisch ungesättigte Monomere Hexandioldiacrylat und/oder Allyl(meth)acrylat bevorzugt.

Hinsichtlich der in den einzelnen Polymerisationsstufen eingesetzten Monomermischungen (A), (B) und (C) vor Zumischung des Polyurethans (P) sind spezielle, in der Folge dargelegte Bedingungen einzuhalten.

Zunächst ist festzuhalten, dass die Mischungen (A), (B) und (C) jedenfalls unterschiedliche voneinander sind. Sie enthalten also jeweils unterschiedliche Monomere und/oder unterschiedliche Anteile mindestens eines bestimmten Monomers. Die nachfolgende Beschreibung der konkreten Monomerenmischungen (A), (B) und (C) bezieht sich jeweils nur auf die entsprechende Monomerenmischung, d.h. ohne Beimischung des Polyurethans (P).

Die Mischung (A) enthält mindestens 50 Gew.-%, bevorzugt mindestens 55 Gew.-%, von olefinisch ungesättigten Monomeren mit einer Wasserlöslichkeit von kleiner 0,5 g/l bei 25°C. Ein entsprechendes bevorzugtes Monomer ist Styrol.

Die Löslichkeit der Monomere in Wasser kann über eine Gleichgewichtseinstellung mit dem Gasraum oberhalb der wässrigen Phase bestimmt werden (analog der Literatur X.- S. Chai, Q.X. Hou, F.J. Schork, Journal of Applied Polymer Science Vol. 99, 1296-1301 (2006)).

Dazu wird in einem 20 ml Gasraumprobenröhrchen zu einem definierten Volumen an Wasser, bevorzugt 2 ml, eine so große Masse des jeweiligen Monomers gegeben, dass sich diese Masse jedenfalls nicht vollständig in dem gewählten Volumen Wasser lösen kann. Zusätzlich wird ein Emulgator (10 ppm, bezogen auf Gesamtmasse der Probenmischung) hinzugegeben. Um die Gleichgewichtskonzentration zu erhalten, wird die Mischung ständig geschüttelt. Die überstehende Gasphase wird gegen Inertgas ausgetauscht, so dass sich wieder ein Gleichgewicht einstellt. In der entnommenen Gasphase wird jeweils der Anteil der zu detektieren Substanz gemessen (bevorzugt mittels Gaschromatographie). Die Gleichgewichtskonzentration in Wasser kann bestimmt werden, indem der Anteil des Monomers in der Gasphase graphisch ausgewertet wird. Die Steigung der Kurve ändert sich von einem nahezu konstanten Wert (S1) zu einer signifikant negativen Steigung (S2) sobald der überschüssige Monomeranteil aus der Mischung entfernt wurde. Die Gleichgewichtskonzentration ist dabei an dem Schnittpunkt der Geraden mit der Steigung S1 und der Geraden mit der Steigung S2 erreicht. Die beschriebene Bestimmung wird bei 25°C durchgeführt.

Bevorzugt enthält die Monomerenmischung (A) keine hydroxyfunktionellen Monomere. Ebenfalls bevorzugt enthält die Monomerenmischung (A) keine säurefunktionellen Monomere.

Ganz besonders bevorzugt enthält die Monomerenmischung (A) gar keine Monomere mit funktionellen Gruppen enthaltend Heteroatome. Dies bedeutet, dass Heteroatome, sofern vorhanden, lediglich in Form von verbrückenden Gruppen vorhanden sind. Dies ist beispielsweise der Fall in den oben beschriebenen (meth)acrylat-basierten, einfach olefinisch ungesättigten Monomeren, die als Rest R einen Alkylrest besitzen.

In einer besonders bevorzugten Ausführungsform enthält die Monomermischung (A) mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Die in der Mischung (A) enthaltenen Monomere werden so ausgewählt, dass ein daraus hergestelltes Polymerisat (a) eine Glasübergangstemperatur von 10 bis 65°C, bevorzugt von 30 bis 50°C besitzt.

Die Glasübergangstemperatur $T_g$ wird im Rahmen der Erfindung experimentell gemäß DIN 51005 "Thermische Analyse (TA) - Begriffe" und DIN 53765 "Thermische Analyse - Dynamische Differenzkalorimetrie (DDK)" bestimmt. Dabei wird eine Probe von 15 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung ($N_2$) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung gemäß DIN 53765, Punkt 8.1, diejenige Temperatur im 2. Messlauf bezeichnet, bei der die Hälfte der Änderung der spezifischen Wärmekapazität (0,5 Delta $c_p$) erreicht ist. Sie wird aus dem DDK-Diagramm (Auftragung des Wärmestroms gegen die Temperatur) ermittelt. Es handelt sich um die Temperatur, die dem Schnittpunkt der Mittellinie zwischen den extrapolierten Basislinien vor und nach dem Glasübergang mit der Messkurve entspricht.

Für eine zielführende Abschätzung der bei der Messung zu erwartenden Glasübergangstemperatur kann die bekannte Fox-Gleichung (vgl. T.G. Fox, Bull. Am. Phys. Soc. 1 (1956) 123) herangezogen werden. Da die Fox-Gleichung eine gute Näherung darstellt, die auf den Glasübergangstemperaturen der Homopolymere und deren Gewichtsteilen

ohne Einbeziehung des Molekulargewichts basiert, kann sie als zielführendes Hilfsmittel für den Fachmann bei der Synthese eingesetzt werden, sodass eine gewünschte Glasübergangstemperatur über wenige zielgerichtete Versuche eingestellt werden kann.

Das in Stufe i. durch die Emulsionspolymerisation der Monomerenmischung (A) hergestellte Polymerisat (auch genannt Polymer) wird auch als Saat bezeichnet.

Die Saat besitzt bevorzugt eine Teilchengröße von 20 bis 125 nm (gemessen mittels dynamischer Lichtstreuung (Photonenkorrelationsspektroskopie) nach DIN ISO 13321, wobei unter Teilchengröße im Rahmen der vorliegenden Erfindung der gemessene mittlere Partikeldurchmesser (Z-Average mean) zu verstehen ist. Gemessen werden kann die Teilchengröße beispielsweise mit einem "Malvern Nano S90" (Fa. Malvern Instruments).

Die Monomerenmischung (B) enthält mindestens ein mehrfach olefinisch ungesättigtes Monomer, bevorzugt mindestens ein zweifach olefinisch ungesättigtes Monomer. Ein entsprechendes bevorzugtes Monomer ist Hexandioldiacrylat.

Bevorzugt enthält die Monomerenmischung (B) keine hydroxyfunktionellen Monomere. Ebenfalls bevorzugt enthält die Monomerenmischung (B) keine säurefunktionellen Monomere.

Ganz besonders bevorzugt enthält die Monomerenmischung (B) gar keine Monomere mit funktionellen Gruppen enthaltend Heteroatome. Dies bedeutet, dass Heteroatome, sofern vorhanden, lediglich in Form von verbrückenden Gruppen vorhanden sind. Dies ist beispielsweise der Fall in den oben beschriebenen (meth)acrylat-basierten, einfach olefinisch ungesättigten Monomeren, die als Rest R einen Alkylrest besitzen.

In einer besonders bevorzugten Ausführungsform enthält die Monomermischung (B) neben dem mindestens einen mehrfach olefinisch ungesättigten Monomer jedenfalls noch folgende Monomere: Zum einen mindestens einen einfach ungesättigten Ester der (Meth)acrylsäure mit einem Alkylrest und zum anderen mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Der Anteil von mehrfach ungesättigten Monomeren beträgt bevorzugt von 0,05 bis 3 mol.-%, bezogen auf die molare Gesamtmenge von Monomeren der Monomerenmischung (B).

Die in der Mischung (B) enthaltenen Monomere werden so ausgewählt, dass ein daraus hergestelltes Polymerisat (b) eine Glasübergangstemperatur von -35 bis 15°C, bevorzugt von -25 bis +7°C besitzt.

Das in Stufe ii. durch die Emulsionspolymerisation der Monomerenmischung (B) in Anwesenheit der Saat hergestellte Polymerisat wird auch als Kern bezeichnet. Nach der Stufe ii. resultiert also ein Polymerisat, welches Saat und Kern umfasst.

Das Polymerisat, welches nach der Stufe ii. erhalten wird, besitzt bevorzugt eine Teilchengröße von 80 bis 280 nm, bevorzugt 120 bis 250 nm.

Die in der Mischung (C) enthaltenen Monomere werden so ausgewählt, dass ein daraus hergestelltes Polymer eine Glasübergangstemperatur von -50 bis 15°C, bevorzugt von -20 bis +12°C besitzt.

Die olefinisch ungesättigten Monomere der Mischung (C) werden dabei bevorzugt so ausgewählt, dass das resultierende Polymerisat, umfassend Saat, Kern und Schale, eine Säurezahl von 10 bis 25 hat.

Demzufolge enthält die Mischung (C) bevorzugt mindestens eine alpha-beta ungesättigte Carbonsäure, insbesondere bevorzugt (Meth)acrylsäure.

Die olefinisch ungesättigten Monomere der Mischung (C) werden zudem bevorzugt so ausgewählt, dass das resultierende Polymerisat, umfassend Saat, Kern und Schale, eine OH-Zahl von 0 bis 30, bevorzugt 10 bis 25 hat.

Bei allen vorstehend genannten Säurezahlen und OH-Zahlen handelt es sich um auf Basis der insgesamt eingesetzten Monomerenmischungen (A), (B) und (C) berechnete Werte ohne Zumischung des Polyurethans (P).

In einer besonders bevorzugten Ausführungsform enthält die Monomermischung (C) mindestens eine alpha-beta ungesättigte Carbonsäure und mindestens einen einfach ungesättigten Ester der (Meth)acrylsäure mit einem mit einer Hydroxylgruppe substituierten Alkylrest.

In einer ganz besonders bevorzugten Ausführungsform enthält die Monomermischung (C) mindestens eine alpha-beta ungesättigte Carbonsäure, mindestens einen einfach ungesättigten Ester der (Meth)acrylsäure mit einem mit einer Hydroxylgruppe substituierten Alkylrest und mindestens einen einfach ungesättigten Ester der (Meth)acrylsäure mit einem Alkylrest.

Sofern im Rahmen der vorliegenden Erfindung von einen Alkylrest ohne weitere Spezifizierung gesprochen wird, ist hierunter immer ein reiner Alkylrest ohne funktionelle Gruppen und Heteroatome zu verstehen.

Das in Stufe iii. durch die Emulsionspolymerisation der Monomerenmischung (C) in Anwesenheit von Saat und Kern hergestellte Polymerisat wird auch als Schale bezeichnet. Nach der Stufe iii. resultiert also ein Polymerisat SCS, welches Saat, Kern und Schale umfasst.

Das Polymerisat SCS besitzt nach seiner Herstellung vorzugsweise eine Teilchengröße von 100 bis 500 nm, bevorzugt 125 bis 400 nm, ganz besonders bevorzugt von 130 bis 300 nm.

Bevorzugt werden die Anteile der Monomerenmischungen wie folgt aufeinander abgestimmt. Der Anteil der Mischung (A) beträgt von 0,1 bis 10 Gew.-, der Anteil der Mischung (B) von 60 bis 80 Gew.-% und der Anteil der Mischung

(C) von 10 bis 30 Gew.-%, jeweils bezogen auf die Summe der Einzelmengen der Mischungen (A), (B) und (C).

Die wässrige Dispersion besitzt bevorzugt einen pH-Wert von 5,0 bis 9,0, besonders bevorzugt 7,0 bis 8,5, ganz besonders bevorzugt 7,5 bis 8,5. Der pH-Wert kann bereits während der Herstellung, beispielsweise durch den Einsatz von wie weiter unten genannten Basen, konstant gehalten werden oder auch nach der Herstellung des Polymerisats SCS gezielt eingestellt werden.

In ganz besonders bevorzugten Ausführungsformen gilt, dass die wässrige Dispersion einen pH-Wert von 5,0 bis 9,0 aufweist und das darin enthaltene mindestens eine Polymerisat eine Teilchengröße von 100 bis 500 nm aufweist. Nochmals bevorzugtere Bereichskombinationen sind: pH-Wert von 7,0 bis 8,5 und eine Teilchengröße von 125 bis 400 nm, nochmals bevorzugt pH-Wert von 7,5 bis 8,5 und eine Teilchengröße von 130 bis 300 nm.

Bevorzugt werden die beschriebenen Stufen i. bis iii. ohne Zusatz von zur Einstellung des pH-Werts bekannten Säuren oder Basen durchgeführt. Werden bei der Herstellung des Polymerisats dann beispielsweise carboxyfunktionelle Monomere eingesetzt, was im Rahmen der Stufe iii. bevorzugt ist, so kann der pH-Wert der Dispersion nach Abschluss der Stufe iii. bei kleiner 7 liegen. Demzufolge ist eine Zugabe von Base notwendig, um den pH-Wert auf einen höheren Wert, wie beispielsweise einen Wert in den bevorzugten Bereichen, einzustellen.

Aus oben Gesagtem folgt, dass der pH-Wert bevorzugt nach der Stufe iii. entsprechend eingestellt wird beziehungsweise eingestellt werden muss, insbesondere durch Zugabe einer Base wie einer (organischen) stickstoffhaltigen Base wie einem Amin wie Ammoniak, Trimethylamin, Triethylamin, Tributylamine, Dimethylanilin, Triphenylamin, N,N-Dimethylethanolamin, Methyldiethanolamin oder Triethanolamin, sowie durch Zugabe von Natriumhydrogencarbonat oder Boraten und auch Mischungen der vorgenannten Substanzen. Dies schließt aber nicht aus, dass der pH-Wert auch vor, während oder nach den Emulsionspolymerisationen oder auch zwischen den einzelnen Emulsionspolymerisationen eingestellt werden kann. Ebenfalls möglich ist, dass durch die Wahl der Monomere die Einstellung des pH-Werts auf einen gewünschten Wert gar nicht notwendig ist.

Dabei wird die Messung des pH-Wertes bevorzugt mit einem pH-Meter (beispielsweise Mettler-Toledo S20 SevenEasy pH Meter) mit einer kombinierten pH-Elektrode (beispielsweise Mettler-Toledo InLab® Routine) durchgeführt.

Der Festkörper der wässrigen Dispersion beträgt bevorzugt 15 bis 40 % nochmals bevorzugt 20 bis 30 %.

Die Dispersion enthaltend ein Polymerisat SCS ist wässrig. Der Ausdruck wässrig ist dem Fachmann bekannt. Es handelt sich um ein System, das als Lösemittel hauptsächlich Wasser und organische Lösemittel lediglich in untergeordneten Anteilen enthält. Inwieweit der Ausdruck wässrig in bevorzugten Ausführungsformen zu verstehen ist, kann sich für unterschiedliche betrachtete Systeme (wie der wässrigen Dispersion oder dem wässrigen Basislack) voneinander unterscheiden.

Nochmals bevorzugt ist, dass die prozentuale Summe aus dem Festkörper der Dispersion und dem Anteil von Wasser an der Dispersion bei mindestens 80 Gew.-%, bevorzugt bei mindestens 90 Gew.-% liegt. Darunter bevorzugt sind Bereiche von 80 bis 99 Gew.-%, insbesondere 90 bis 97,5 Gew.-%. In dieser Angabe wird der Festkörper, der traditionell nur die Einheit "%" besitzt, in "Gew.-%" angegeben. Da der Festkörper letztlich auch eine prozentuale Gewichtsangabe darstellt, ist diese Form der Darstellung gerechtfertigt. Hat also beispielsweise eine Dispersion einen Festkörper von 25 % und einen Wassergehalt von 70 Gew.-%, so beträgt die oben definierte prozentuale Summe aus dem Festkörper und dem Anteil von Wasser 95 Gew.-%.

Demzufolge besteht die Dispersion weitestgehend aus Wasser und dem Polymerisat SCS und enthält umweltbelastende Komponenten wie insbesondere organische Lösemittel nicht oder nur in geringen Anteilen.

## Der pigmentierte wässrige Basislack

Die vorliegende Erfindung betrifft ferner einen pigmentierten wässrigen Basislack, welcher mindestens eine erfindungsgemäße wässrige Dispersion enthält.

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Um eine Basislackschicht insbesondere gegen Umwelteinflüsse zu schützen, wird auf dieser mindestens noch eine zusätzliche Klarlackschicht appliziert.

Der Anteil der mindestens einen wässrigen Dispersion, bezogen auf das Gesamtgewicht des wässrigen pigmentierten Basislacks, beträgt bevorzugt 5 bis 60 Gew.-%, besonders bevorzugt 10 bis 50 Gew.-% und ganz besonders bevorzugt 20 bis 45 Gew.-%.

Der Anteil der aus den wässrigen Dispersionen stammenden Polymerisate SCS beträgt, bezogen auf das Gesamtgewicht des wässrigen Basislacks, vorzugsweise von 1 bis 24 Gew.-%, bevorzugt 2,5 bis 20,0 Gew.-%, besonders bevorzugt 3 bis 18,0 Gew.-%.

Die Bestimmung beziehungsweise Festlegung des Anteils der aus den erfindungsgemäß einzusetzenden Dispersionen stammenden Polymerisate am wässrigen Basislack kann über die Bestimmung des Festkörpers (auch genannt

nicht flüchtiger Anteil, Festkörpergehalt oder Festkörperanteil) einer wässrigen Dispersion, die in dem Basislack eingesetzt werden soll, erfolgen.

Im Falle einer möglichen Spezifizierung auf Basislacke enthaltend bevorzugte wässrige Dispersionen in einem speziellen Anteilsbereich gilt folgendes. Die wässrigen Dispersionen, die nicht in die bevorzugte Gruppe fallen, können selbstverständlich weiterhin im wässrigen Basislack enthalten sein. Der spezielle Anteilsbereich gilt dann nur für die bevorzugte Gruppe von wässrigen Dispersionen. Bevorzugt ist allerdings, dass für den Gesamtanteil von wässrigen Dispersionen bestehend aus Dispersionen aus der bevorzugten Gruppe und Dispersionen, die nicht in die bevorzugte Gruppe fallen, ebenfalls der spezielle Anteilsbereich gilt.

Würde also eine Beschränkung auf einen Anteilsbereich von 10 bis 50 Gew.-% und eine bevorzugte Gruppe von wässrigen Dispersionen durchgeführt werden, so gilt dieser Anteilsbereich augenscheinlich zunächst nur für die bevorzugte Gruppe an wässrigen Dispersionen. Bevorzugt wäre dann aber, dass insgesamt von allen ursprünglich umfassten wässrigen Dispersionen bestehend aus wässrigen Dispersionen aus der bevorzugten Gruppe und wässrigen Dispersionen, die nicht in die bevorzugte Gruppe fallen, ebenfalls von 10 bis 50 Gew.-% enthalten sind. Werden also 35 Gew.-% von wässrigen Dispersionen der bevorzugten Gruppe eingesetzt, so können höchstens 15 Gew.-% der wässrigen Dispersionen der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die weiter unten genannten Pigmente oder auch die weiter unten genannten Vernetzungsmittel wie Melaminharze.

Der wässrige Basislack enthält in der Regel farbgebende Pigmente und/oder optisch effektgebende Pigmente.

Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben.

Effektpigmente sind beispielsweise Metalleffektpigmente wie z.B. Aluminiumpigmente, Goldbronzen, feuergefärbte Bronzen und/oder Eisenoxid-Aluminiumpigmente, Perglanzpigmente wie z.B. Fischsilber, basisches Bleicarbonat, Bismutoxidchlorid und/oder Metalloxid-Glimmer-Pigmente und/oder sonstige Effektpigmente wie z.B. mikronisiertes Titandioxid, blättchenförmiges Graphit, blättchenförmiges Eisenoxid, Mehrschicht-Effekt-Pigmente aus PVD-Filmen und/oder Liquid Crystal Polymer-Pigmente.

Der Anteil der Pigmente kann beispielsweise im Bereich von 1 bis 40 Gew.-%, bevorzugt 2 bis 20 Gew.-%, besonders bevorzugt 5 bis 15 Gew.-%, bezogen auf das Gesamtgewicht des pigmentierten wässrigen Basislacks, liegen.

Im erfindungsgemäßen Basislack können physikalisch, thermisch oder thermisch und mit aktinischer Strahlung härtbare Bindemittel enthalten sein.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig (vgl. Römpp Lexikon, Lacke und Druckfarben, Georg Thieme Verlag, 1998, S. 274)

Im Rahmen der vorliegenden Erfindung bedeutet der Begriff "thermische Härtung" die Vernetzung einer Lackschicht durch chemische Reaktion, bei der in dem zugrunde liegenden Lack entweder ein separat vorliegendes Vernetzungsmittel oder aber selbstvernetzende Bindemittel angewandt werden (vgl. Römpp Lexikon, Lacke und Druckfarben, Georg Thieme Verlag, 1998, S. 274). Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischer Strahlung gemeinsam angewandt, spricht man auch von "Dual Cure".

In der vorliegenden Erfindung sind Basislacke bevorzugt, die thermisch oder thermisch und mit aktinischer Strahlung, also mittels "Dual Cure", härtbar sind.

Insbesondere sind solche Basislacke bevorzugt, die als Bindemittel ein Polyacrylatharz und als Vernetzungsmittel ein Aminoplastharz oder ein blockiertes oder unblockiertes Polyisocyanat, bevorzugt ein Aminoplasthatz, enthalten. Unter den Aminoplastharzen sind insbesondere Melaminharze bevorzugt.

Bevorzugt enthalten die erfindungsgemäßen Basislacke zusätzlich zu der erfindungsgemäßen wässrigen Dispersion ein weiteres Bindemittel, bevorzugt ein Polyurethanharz.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein

Polyurethanharz, in dessen Gegenwart olefinisch ungesättigte Monomere polymerisiert wurden. Das Polyurethanharz kann dabei neben dem aus der Polymerisation der olefinisch ungesättigten Monomere hervorgegangenen Polymer vorliegen ohne dass diese kovalent miteinander verbunden sind. Ebenso kann das Polyurethanharz aber auch mit dem aus der Polymerisation der olefinisch ungesättigten Monomere hervorgegangenen Polymer kovalent verbunden sein. Bei den olefinisch ungesättigten Monomeren handelt es sich bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethanharz gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in

- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.
- der deutschen Patentanmeldung DE 4437535 A1, Seite 7, Zeile 55 bis Seite 8, Zeile 23
- der internationalen Patentanmeldung WO 91/15528 Seite 23, Zeile 29 bis Seite 24, Zeile 24.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol bestimmt mittels GPC eingesetzt.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um

- funktionelle Gruppen, die durch Neutralisationsmittel und/oder Quaternisierungsmittel in Kationen überführt werden können, und/oder kationische Gruppen (kationische Modifizierung)
  oder
- funktionelle Gruppen, die durch Neutralisationsmittel in Anionen überführt werden können, und/oder anionische Gruppen (anionische Modifizierung)
  und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (Z) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten-und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (Z) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:

- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie

Ethylvinylether.

Bevorzugt werden (Meth)acrylatgruppen-haltige Monomere eingesetzt, so dass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polyaddition von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethanharz besitzt vorzugsweise ein zahlenmittleres Molekulargewicht von 200 bis 30000 g/mol, bevorzugt von 2000 bis 20000 g/mol. Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g.

Der erfindungsgemäße wässrige Basislack kann zudem mindestens einen Polyester, insbesondere einen Polyester mit einem zahlenmittleren Molekulargewicht von 400 bis 5000 g/mol als Bindemittel enthalten. Entsprechende Polyester werden beispielsweise in DE 4009858 in Spalte 6, Zeile 53 bis Spalte 7, Zeile 61 und Spalte 10, Zeile 24 bis Spalte 13, Zeile 3 beschrieben.

Bevorzugt ist zudem mindestens ein Verdicker enthalten. Als Verdicker eignen sich anorganische Verdicker aus der Gruppe der Schichtsilikate. Besonders geeignet sind Lithium-Aluminium-Magnesium Silikate.

Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis® AS 1130 (BASF SE) und Polyurethanverdickern, wie beispielsweise dem Handelsprodukt Rheovis® PU1250 der Firma BASF SE. Als (Meth)acrylsäure-(Meth)acrylat-Copolymerisat-Verdicker werden solche bezeichnet, die neben Acrylsäure und/oder Methacrylsäure auch ein oder mehrere Acrylsäureester (das heißt Acrylate) und/oder ein oder mehrere Methacrylsäureester (das heißt Methacrylate) einpolymerisiert enthalten. Den (Meth)acrylsäure-(Meth)acrylat-Copolymerisat-Verdickern gemein ist, dass diese in alkalischem Medium, das heißt bei pH-Werten > 7, insbesondere > 7,5 durch Salzbildung der Acrylsäure und/oder Methacrylsäure, das heißt durch die Bildung von Carboxylatgruppen einen starken Viskositätsanstieg zeigen. Werden (Meth)acrylsäureester eingesetzt, die aus (Meth)acrylsäure und einem $C_1$-$C_6$-Alkanol gebildet werden, so erhält man im wesentlichen nicht-assoziativ wirkende (Meth)acrylsäure-(Meth)acrylat-Copolymerisat-Verdicker, wie beispielsweise das oben genannte Rheovis AS 1130. Im Wesentlichen nicht-assoziativ wirkende (Meth)acrylsäure-(Meth)acrylat-Copolymerisat-Verdicker werden in der Literatur auch als ASE-Verdicker ("Alkali Soluble/Swellable Emulsion", alkalisch lösliche/quellbare Emulsion oder Dispersion) bezeichnet. Als (Meth)acrylsäure-(Meth)acrylatCopolymerisat-Verdicker sind jedoch auch sogenannte HASE-Verdicker ("Hydrophobically Modified Anionic Soluble Emulsions", hydrophob modifizierte anionisch lösliche Emulsion oder Dispersion) einsetzbar. Diese werden erhalten, wenn als Alkanol anstelle oder zusätzlich zu den $C_1$-$C_6$-Alkanolen solche mit einer größeren Anzahl an Kohlenstoffatomen, beispielsweise 7 bis 30, oder 8 bis 20 Kohlenstoffatomen eingesetzt werden. HASE-Verdicker wirken im Wesentlichen assoziativ verdickend. Die einsetzbaren (Meth)acrylsäure-(Meth)acrylatCopolymerisat-Verdicker eignen sich aufgrund ihrer verdickenden Eigenschaften nicht als Bindemittel-Harze, sie fallen somit nicht unter die als Bindemittel bezeichneten physikalisch, thermisch oder thermisch und aktinisch härtbaren Bindemitteln und sind somit explizit verschieden von den Poly(meth)acrylat basierten Bindemitteln, die in den erfindungsgemäßen Basislackzusammensetzungen eingesetzt werden können. Als Polyurethanverdicker sind die in der Literatur als HEUR ("Hydrophobically Modified Ethylene Oxide Urethane

Rheology Modifiers", hydrophob modifizierte Ethylenoxid-Urethan-Rheologieadditive) bezeichneten, assoziativ wirkenden Verdicker zu verstehen. Chemisch handelt es sich hierbei um nichtionische verzweigte oder unverzweigte Blockcopolymere aus Polyethylenoxid-Ketten (manchmal auch Polypropylenoxid-Ketten), die über Urethanbindungen miteinander verknüpft sind und die endständige langkettige Alkyl- oder Alkylengruppen mit 8 bis 30 Kohlenstoffatomen tragen.

Typische Alkylgruppen sind beispielsweise Dodecyl- oder Stearyl-Gruppen, eine typische Alkenylgruppe ist beispielsweise eine Oleylgruppe, eine typische Arylgruppe ist die Phenylgruppe und eine typische alkylierte Arylgruppe ist beispielsweise eine Nonylphenylgruppe. Die Polyurethan-Verdicker eignen sich aufgrund ihrer verdickenden Eigenschaften und Struktur nicht als physikalisch, thermisch oder thermisch und physikalisch härtbare Bindemittel-Harze. Sie sind somit explizit verschieden von den Polyurethanen, die in den erfindungsgemäßen BasislackZusammensetzungen als Bindemittel eingesetzt werden können.

Darüber hinaus kann der wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von den vorgenannten Polyurethanharzen verschiedene physikalisch, thermisch und/oder mit aktinischer Strahlung härtbare Harze als Bindemittel, weitere von den vorgenannten verschiedene Vernetzungsmittel, organische Lösemittel, Reaktivverdünner, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus

- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],

bekannt. Sie werden in den üblichen und bekannten Mengen eingesetzt.

Der Festkörpergehalt der erfindungsgemäßen Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 10 bis 65 Gew.-% und insbesondere bevorzugt bei 15 bis 60 Gew.-%.

Die Herstellung der erfindungsgemäß eingesetzten Basislacke kann unter Einsatz der für die Herstellung von Basislacken üblichen und bekannten Mischverfahren und Mischaggregate erfolgen.

**Das erfindungsgemäße Verfahren und die erfindungsgemäße Mehrschichtlackierung**

Ein weiterer Aspekt der vorliegenden Erfindung ist ein Verfahren zur Herstellung einer mehrschichtigen Lackierung, bei dem

(1) ein pigmentierter wässriger Basislack auf ein Substrat aufgebracht wird,
(2) auf die so erhaltene Basislackschicht ein Klarlack aufgebracht wird und anschließend
(3) die Basislackschicht zusammen mit der Klarlackschicht gehärtet wird,

welches dadurch gekennzeichnet ist, dass in Stufe (1) ein pigmentierter wässriger Basislack eingesetzt wird, welcher mindestens eine erfindungsgemäße wässrige Dispersion enthält. Alle vorstehend genannten Ausführungen hinsichtlich der erfindungsgemäßen Dispersion und des pigmentierten wässrigen Basislacks gelten auch für das erfindungsgemäße Verfahren. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäßen pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden. Soll ein Metallsubstrat beschichtet werden, so wird dieses vor der Applikation des Füllers oder Grundierfüllers bevorzugt noch mit einer Elektrotauchlackierung beschichtet. Es ist aber auch möglich den Basislack direkt auf die Elektrotauchlackierung aufzubringen.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf ein Metallsubstrat kann in

den im Rahmen der Automobilindustrie üblichen Schichtdicken im Bereich von beispielsweise 5 bis 100 Mikrometer, bevorzugt 5 bis 60 Mikrometer erfolgen. Dabei werden vorzugsweise Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Nach der Applikation des pigmentierten wässrigen Basislacks kann dieser vorzugsweise nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als Vernetzungsmittel ein Aminoplastharz oder ein blockiertes oder unblockiertes Polyisocyanat, bevorzugt ein Aminoplasthatz, enthalten. Unter den Aminoplastharzen sind Melaminharze bevorzugt.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich der erfindungsgemäßen wässrigen Dispersion enthaltend das Polymerisat SCS, des pigmentierten wässrigen Basislacks und des erfindungsgemäßen Verfahrens gelten entsprechend auch für die besagte Mehrschichtlackierung. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich vorzugsweise bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert oder komplett überlackiert werden soll. Unter Autoreparaturlackierung ist sowohl die OEM-Automobilreparaturlackierung als auch die Automobilreparaturlackierung gemeint, welche beispielsweise in einer Werkstatt stattfindet.

Das erfindungsgemäße Verfahren eignet sich demnach zur Ausbesserung von Fehlstellen auf Mehrschichtlackierungen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235, "Filmfehler" beschrieben. Hierzu zählen beispielsweise Mängel in der Haftung, die sich als Abblättern oder in einer Blasenbildung äußern. Ungewollte Änderungen in den mechanischen Eigenschaften, wie Versprödung oder Rissbildung sind als Filmfehler anzusehen.

In einer bevorzugten Ausführungsform des erfindungsgemäßen Verfahrens handelt es sich bei dem Substrat aus Stufe (1) um eine Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse komplett überlackiert (Doppellackierung), sondern nur der sogenannte "Spot" repariert. Letzterer Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen (Originallackierungen) in der OEM-Automobilreparaturlackierung.

Sofern im Rahmen der vorliegenden Erfindung der Bereich der Automobilreparaturlackierung angesprochen ist, das heißt also von der Ausbesserung von Fehlstellen die Rede ist, und dabei als Substrat eine Mehrschichtlackierung, welche Fehlstellen besitzt, genannt wird, ist hiermit selbstverständlich gemeint, dass diese Substrat-Mehrschichtlackierung mit Fehlstellen (Originallackierung) in der Regel auf einem wie oben beschriebenen Metallsubstrat oder einem Kunststoffsubstrat angeordnet ist.

Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, der zur Herstellung der Substrat-Mehrschichtlackierung mit Fehlstellen (Originallackierung) eingesetzt wurde.

Die vorstehend genannten Ausführungen bezüglich des erfindungsgemäßen Polymerisats und des wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebenden Lackierungen und farb- und effektgebenden Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Bevorzugt wird das Anschleifen so ausgeführt, dass von der Originallackierung nur die Basislackierung und die Klarlackierung ab- oder angeschliffen werden, nicht aber die in der Regel darunter angeordnete Füllerschicht und Grundierungsschicht abgeschliffen wird. Auf diese Weise kann bei der Reparatur insbesondere auf die erneute Applikation von speziellen Grundierungen und Grundierfüllern verzichtet werden. Diese Form des Anschleifens hat sich insbesondere im Bereich der OEM-Automobilreparaturlackierung bewährt, da hier im Gegensatz zur Reparatur in einer Werkstatt in der Regel nur Fehlstellen im Schichtbereich Basislack und/oder Klarlack auftreten, jedoch insbesondere keine Fehlstellen im Bereich der darunter angeordneten Füller- und Grundierungsschichten auftreten. Fehlstellen in den letztgenannten Schichten sind eher im Bereich der Reparatur in Werkstätten anzutreffen. Beispielhaft seien Lackschäden wie Kratzer genannt, welche beispielsweise durch mechanische Einflüsse erzeugt werden und oft bis auf die Substratoberfläche (Metall- oder Kunststoffsubstrat) reichen.

Nach dem Anschleifen erfolgt die Applikation des pigmentierten wässrigen Basislacks auf die Fehlstelle in der Originallackierung in der Regel durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der als Vernetzungsmittel ein Aminoplastharz, bevorzugt ein Melaminharz und ein mit diesem Vernetzungsmittel reaktives Bindemittel, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als Vernetzungsmittel ein Aminoplastharz eingesetzt, so kommt es bei diesen Temperaturen in der Basislackschicht nur zu einer geringen Vernetzung bzw. zu keiner Vernetzung durch das Aminoplastharz. In diesem Fall dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20 °C.

Beim sogenannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt. Wird, wie oben beschrieben als Vernetzungsmittel ein Aminoplastharz eingesetzt, so kommt es bei diesen Temperaturen in der Basislackschicht zu einer Vernetzung durch das Aminoplastharz.

Im Rahmen der Ausbesserung von Fehlstellen auf Mehrschichtlackierungen, das heißt also, wenn das Substrat eine Fehlstellen aufweisende Originallackierung darstellt, bevorzugt eine erfindungsgemäße Fehlstellen aufweisende Mehrschichtlackierung, wird bevorzugt das Niedrigtemperatureinbrennen angewendet.

Ein weiterer Aspekt der vorliegenden Erfindung ist die Verwendung der erfindungsgemäßen wässrigen Dispersionen zur Herstellung von pigmentierten wässrigen Basislacken.

Ferner können die erfindungsgemäßen wässrigen Dispersionen zur Haftungsverbesserung bei der Lackierung von Metall- und Kunststoffsubstraten eingesetzt werden. Ebenso lassen sie sich in der Autoreparaturlackierung einsetzen.

Werden die besagten pigmentierten wässrigen Basislacke bei der Lackierung von Metall- und Kunststoffsubstraten eingesetzt, so führt der Einsatz der erfindungsgemäßen wässrigen Dispersion insbesondere zu einer Verbesserung der Haftung zwischen der Basislackschicht und der unmittelbar an diese angrenzende Klarlackschicht. Die erfindungsgemäße Dispersion wird daher bevorzugt zur Haftungsverbesserung zwischen Basislackschicht und Klarlackschicht bei der Lackierung von Metallsubstraten und Kunststoffsubstraten verwendet.

Werden die besagten pigmentierten wässrigen Basislacke bei der Autoreparaturlackierung eingesetzt, so führt der Einsatz der erfindungsgemäßen wässrigen Dispersion insbesondere zu einer Haftungsverbesserung zwischen Basislack und Erstlackierung. Die erfindungsgemäße wässrige Dispersion wird daher ebenfalls bevorzugt zur Verbesserung der Haftung zwischen Basislackschicht und Erstlackierung in der Autoreparaturlackierung, besonders bevorzugt in der OEM-Automobilreparaturlackierung verwendet.

Die Haftungsproblematik bei Systemen des Stands der Technik ist insbesondere dann eklatant, wenn die beschichteten Substrate der Witterung ausgesetzt sind. Entsprechende Witterungsverhältnisse lassen sich durch eine sogenannte Schwitzwasserlagerung simulieren. Der Begriff Schwitzwasserlagerung bezeichnet die Lagerung von beschichteten Substraten in einer Klimakammer nach Prüfklima CH nach DIN EN ISO 6270-2:2005-09.

Die erfindungsgemäßen wässrigen Dispersionen werden daher insbesondere auch verwendet, um die Haftung nach einer Schwitzwasserlagerung zu verbessern. Die Haftung wird bevorzugt mittels Dampfstrahltest nach Prüfverfahren A der DIN 55662:2009-12 untersucht.

Wenn beschichtete Substrate der Witterung ausgesetzt sind treten häufig Blasen und Quellungen auf. Die erfindungsgemäßen wässrigen Dispersionen werden daher insbesondere auch verwendet, um das Auftreten von Blasen und Quellungen in Mehrschichtlackierungen zu reduzieren oder zu verhindern. Das Vorliegen von Blasen und Quellungen kann dabei visuell begutachtet werden.

Im Folgenden wird die Erfindung anhand von Beispielen erläutert.

## Beispiele

Methodenbeschreibung

### Bestimmung der Säure-Zahl

Die Bestimmung der Säurezahl erfolgt gemäß DIN EN ISO 2114 (Datum: Juni 2002), wobei "Verfahren A" eingesetzt wird. Die Säurezahl entspricht der Masse an Kaliumhydroxid in mg, die zur Neutralisation von 1 g Probe unter den in der DIN EN ISO 2114 festgelegten Bedingungen erforderlich ist. Die angegebene Säure-Zahl entspricht dabei der in der DIN Norm angegebenen Gesamtsäurezahl.

### Bestimmung der OH-Zahl

Die Bestimmung der OH-Zahl erfolgt nach DIN 53240-2 (Datum: November 2007). Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1 g Probe gebundenen Menge an Essigsäure äquivalent ist.

### Bestimmung des zahlenmittleren und des gewichtsmittleren Molekulargewichts

Die Bestimmung des zahlenmittleren Molekulargewichts (Mn) erfolgt mittels Gel-Permeations-Chromatographie (GPC) gemäß DIN 55672-1 (Datum: März 2016). Neben dem zahlenmittleren Molekulargewicht können mit dieser Methode zudem das gewichtsmittlere Molekulargewicht (Mw) sowie die Polydispersität d (Verhältnis von gewichtsmittlerem Molekulargewicht (Mw) zu zahlenmittlerem Molekulargewicht (Mn)) bestimmt werden. Als Eluent wird Tetrahydrofuran eingesetzt. Die Bestimmung erfolgt gegen Polystyrol-Standards. Das Säulenmaterial besteht aus Styrol-Divinylbenzol-Copolymeren.

### Bestimmung der Oberflächenspannung

Die Bestimmung der Oberflächenspannung der Polyurethane (P) erfolgte mit Hilfe der Ringmethode gemäß DIN EN 14210:2004-03 bei 23 °C. Als entsprechendes Messgerät wurde ein Ring-/Platte-Tensiometer der Firma Lauda eingesetzt (Lauda TE1C mit Du- Noüy-Ring und Wilhelmy-Platte). Die Werte der Oberflächenspannung werden nach DIN EN 14370:2014-11 korrigiert.

## Bestimmung der Anfallsviskosität

Die Bestimmung der Anfallsviskosität erfolgt nach Einwiegen der Basislackkomponenten gemäß der im Folgenden beschriebenen Herstellvorschriften, jedoch vor Einstellung der jeweiligen Materialien auf einen pH-Wert von 8 mittels Dimethylethanolamin sowie einer in der jeweiligen Herstellvorschrift vorgegebenen Spritzviskosität, indem die Viskosität bei einer vorgegebenen Scherbelastung mit einem Rotations-Viskosimeter (Gerät Rheolab QC mit Temperiersystem C-LTD80/QC der Firma Anton Paar) bei 23 °C gemessen wird.

## Bestimmung des Festkörpergehalts bzw. des nicht-flüchtigen Anteils

Die Bestimmung des nicht-flüchtigen Anteils erfolgt gemäß DIN EN ISO 3251 (Datum: Juni 2008). Dabei werden bei der Bestimmung des Festkörpergehalts der wässrigen Dispersion 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nichtflüchtigen Anteil. Das Volumen des nicht-flüchtigen Anteils kann falls erforderlich gegebenenfalls gemäß DIN 53219 (Datum: August 2009) bestimmt werden. Dabei werden bei der Bestimmung des Festkörpergehalts des wässrigen Basislacks 1 g Probe in eine vorher getrocknete Aluminiumschale eingewogen und 60 Minuten bei 130 °C im Trockenschrank getrocknet, im Exsikkator abgekühlt, und dann zurückgewogen.

## Bestimmung der Trockenschichtdicken

Die Bestimmung der Schichtdicken erfolgt nach DIN EN ISO 2808 (Datum: Mai 2007), Verfahren 12A unter Verwendung des Messgerätes MiniTest® 3100 - 4100 der Firma ElektroPhysik.

## Bestimmung der Lagerstabilität

Zur Bestimmung der Lagerstabilität der erfindungsgemäßen Beschichtungszusammensetzungen enthaltend eine erfindungsgemäße wässrige Dispersion (oder von Vergleichsbeschichtungszusammensetzungen) werden diese vor und nach einer Lagerung bei 40 °C für 2 Wochen mit einem der DIN 53019-1 (Datum: September 2008) entsprechenden und nach DIN 53019-2 (Datum: Februar 2001) kalibrierten Rotationsviskosimeter unter temperierten Bedingungen (23,0 °C ± 0,2 °C) untersucht. Dabei werden die Proben zunächst 5 Minuten mit einer Scherrate von 1000 s-1 (Belastungsphase) und anschließend 8 Minuten mit einer Scherrate von 1 s-1 (Entlastungsphase) geschert.

Das mittlere Viskositätsniveau während der Belastungsphase (Hochscherviskosität) sowie das Niveau nach 8 Minuten Entlastungsphase (Niederscherviskosität) werden aus den Messdaten ermittelt und die Werte vor und nach Lagerung miteinander verglichen indem die jeweiligen prozentualen Änderungen berechnet werden.

## Beurteilung des Auftretens von Kochern und Läufern

Zur Bestimmung der Kocher- und Läuferneigung einer erfindungsgemäßen Beschichtungszusammensetzung (oder einer Vergleichsbeschichtungszusammensetzung) werden gemäß DIN EN ISO 28199-1 (Datum: Januar 2010) und DIN EN ISO 28199-3 (Datum: Januar 2010) Mehrschichtlackierungen nach der folgenden allgemeinen Vorschrift hergestellt:
Ein mit einer Standard-KTL (CathoGuard® 800 der Firma BASF Coatings GmbH) beschichtetes Lochblech der Abmessungen 57 cm x 20 cm aus Stahl (gemäß DIN EN ISO 28199-1, Punkt 8.1, Ausführung A) wird gemäß DIN EN ISO 28199-1, Punkt 8.2 (Ausführung A) vorbereitet. Anschließend erfolgt gemäß DIN EN ISO 28199-1, Punkt 8.3 die Applikation einer erfindungsgemäßen Beschichtungszusammensetzung oder einer Vergleichsbeschichtungszusammensetzung elektrostatisch in einem Einmalauftrag als Keil mit einer Zielschichtdicke (Schichtdicke des getrockneten Materials) im Bereich von 0 $\mu$m bis 30 $\mu$m. Die resultierende Wasserbasislackschicht wird nach einer Ablüftzeit bei 18-23°C von 10 Minuten (Läuferprüfung) bzw. ohne vorherige Ablüftzeit im Umluftofen für 5 Minuten bei 80 °C getrocknet. Im Falle der Prüfung auf Läufer werden die Bleche dabei senkrecht stehend abgelüftet und getrocknet.
Die Bestimmung der Kochergrenze, d.h. derjenigen Basislackschichtdicke, ab der Kocher auftreten, erfolgt nach DIN EN ISO 28199-3, Punkt 5.
Die Bestimmung der Läuferneigung wird nach DIN EN ISO 28199-3, Punkt 4 durchgeführt. Zusätzlich zu der Schichtdicke, bei der ein Läufer die Länge von 10 mm ab Unterkante des Loches überschreitet, wird ggf. diejenige Schichtdicke bestimmt, ab der eine erste Läuferneigung an einem Loch visuell zu beobachten ist.

**Beurteilung des Auftretens von Nadelstichen**

Zur Beurteilung des Auftretens von Nadelstichen wird eine erfindungsgemäße Beschichtungszusammensetzung (oder eine Vergleichszusammensetzung) als Wasserbasislack auf ein mit einer Füllerlackierung beschichtetes Stahlblech der Abmessungen 32 x 60 cm mittels Einfachauftrag appliziert. Zuvor wird das Stahlblech an einer Längskante mit zwei Klebstreifen (Tesaband, 19 mm) versehen, um nach der Beschichtung Schichtdickendifferenzen ermitteln zu können. Der Wasserbasislack wird dann elektrostatisch mit einer Trockenschichtdicke von 16-19 µm appliziert. Die resultierende Wasserbasislackschicht wird anschließend nach einer Ablüftzeit bei Raumtemperatur (18 bis 23°C) von 5 Minuten im Umluftofen für 10 Minuten bei 80 °C getrocknet. Nach Entfernen eines der beiden Klebestreifen wird auf die getrocknete Wasserbasislackschicht per Fließbecherpistole manuell ein handelsüblicher Zweikomponenten-Klarlack (Evergloss® der BASF Coatings GmbH) keilförmig mit einer Trockenschichtdicke von 0-55 µm appliziert. Die resultierende Klarlackschicht wird während 10 Minuten bei Raumtemperatur (18 bis 23°C) abgelüftet; anschließend erfolgt die Härtung im Umluftofen bei 140 °C für weitere 20 Minuten. Nach Entfernung des zweiten Klebestreifens wird die Trockenschichtdicke des Wasserbasislackes kontrolliert sowie für den Klarlackkeil die Schichtdickenbereiche 20-30 µm, 30-40 µm sowie ggf. 40-50 µm auf dem Stahlblech markiert. Die jeweiligen Schichtdicken werden dabei nach DIN EN ISO 2808 (Datum: Mai 2007), Verfahren 12A (z.B. mit dem Messgerät MiniTest 3100 - 4100 der Firma ElektroPhysik) bestimmt.

Die Auswertung der Nadelstiche erfolgt visuell in den getrennten Klarlack-Trockenschichtdickenbereichen (20-30 µm, 30-40 µm und ggf. 40-50 µm). Je Bereich wird die Anzahl der Nadelstiche ausgezählt. Alle Ergebnisse werden auf eine Fläche von 200 $cm^2$ normiert. Zusätzlich wird gegebenenfalls protokolliert, ab welcher Trockenschichtdicke der Klarlackschicht keine Nadelstiche mehr auftreten.

**Bestimmung der winkelabhängigen Helligkeiten/des Flop-Index**

Zur Bestimmung der Helligkeit oder des Flop-Indexes wird eine erfindungsgemäße Beschichtungszusammensetzung (oder eine Vergleichszusammensetzung) als Wasserbasislack auf ein mit einer Füllerlackierung beschichtetes Stahlblech der Abmessungen 32 x 60 cm mittels Zweifachauftrag appliziert, wobei die Applikation im ersten Schritt elektrostatisch mit einer Trockenschichtdicke von 8-9 µm erfolgt und die Applikation im zweiten Schritt nach einer 2-minütigen Ablüftzeit bei Raumtemperatur (18 bis 23°C) pneumatisch mit einer Trockenschichtdicke von 4-5 µm erfolgt. Die resultierende Wasserbasislackschicht wird anschließend nach erneuter Ablüftzeit bei Raumtemperatur von 5 Minuten im Umluftofen für 5 Minuten bei 80 °C getrocknet. Auf die getrocknete Wasserbasislackschicht wird ein handelsüblicher Zweikomponenten-Klarlack (ProGloss® der BASF Coatings GmbH) mit einer Trockenschichtdicke von 40-45 µm appliziert. Die resultierende Klarlackschicht wird während einer Dauer 10 Minuten bei Raumtemperatur (18 bis 23°C) abgelüftet. Anschließend erfolgt eine Härtung im Umluftofen bei 140 °C für weitere 20 Minuten.

Das entsprechend beschichtete Substrat wird mit Hilfe eines Spektralphotometers der Firma X-Rite (X-Rite MA68 Multi-Angle Spectrophotometer) vermessen. Dabei wird die Oberfläche mit einer Lichtquelle beleuchtet. Unter verschiedenen Winkeln wird eine spektrale Detektion im sichtbaren Bereich durchgeführt. Aus den so erhaltenen spektralen Messwerten können, unter Einbeziehung der Normspektralwerte sowie des Reflektionsspektrums der eingesetzten Lichtquelle, Farbwerte im CIEL*a*b*-Farbraum berechnet werden, wobei L* die Helligkeit, a* den Rot-Grün-Wert und b* den Gelb-Blau-Wert charakterisieren. Dieses Verfahren ist zum Beispiel in der ASTM E2194-12 insbesondere für Beschichtungen beschrieben, die wenigstens ein Effektpigment als Pigment enthalten. Der oft für die Quantifizierung des sogenannten Metallic-Effekts herangezogene abgeleitete Wert ist der sogenannte Flop-Index, welcher die Abhängigkeit der Helligkeit vom Beobachtungswinkel beschreibt (vgl. A.B.J. Rodriguez, JOCCA, 1992 (4), S. 150-153). Aus den ermittelten Helligkeitswerten für die Betrachtungswinkel 15°, 45° und 110° kann der so genannte Flop-Index (FL) nach der Formel

$$FL = 2{,}69\,(L^{*}15° - L^{*}110°)^{1{,}11} / (L^{*}45°)^{0{,}86}$$

berechnet werden, wobei L* für den im jeweiligen Messwinkel (15°, 45° und 110°) gemessenen Helligkeitswert steht.

**Schwitzwassertest**

Zur Beurteilung der Schwitzwasserempfindlichkeit werden Mehrschichtlackierungen nach der folgenden allgemeinen Vorschrift hergestellt:

Auf einem mit einer Standard-KTL (CathoGuard® 800 der Firma BASF Coatings) beschichteten Stahlblech wird der Wasserbasiskack elektrostatisch mit einer Zielschichtdicke (Schichtdicke des getrockneten Materials) von 18 µm aufgetragen. Nach einer Ablüftzeit von 4 Minuten bei Raumtemperatur wird der Aufbau im Umluftofen für 10 Minuten bei

80 °C getrocknet.

Auf die getrocknete Wasserbasislackschicht wird per Fließbecherpistole manuell ein handelsüblicher Zweikomponenten-Klarlack (ProGloss® der Firma BASF Coatings GmbH) mit einer Zielschichtdicke (Schichtdicke des getrockneten Materials) von 40-45 μm aufgetragen. Die resultierende Klarlackschicht wird während 10 Minuten bei Raumtemperatur (18 bis 23 °C) abgelüftet; anschließend erfolgt die Härtung im Umluftofen bei 140 °C für weitere 20 Minuten. Die Proben mit den jeweiligen Mehrschichtaufbauten werden anschließend über einen Zeitraum von 10 Tagen in einer Klimakammer nach Prüfklima CH nach DIN EN ISO 6270-2:2005-09 gelagert. Anschließend wurden die Bleche 24 Stunden nach Entnahme aus der Klimakammer visuell bezüglich Blasenbildung und Quellung untersucht. Tritt keine Quellung auf, wird das Ergebnis als iO (in Ordnung) bezeichnet. Bei nur leichter Quellung wird das Ergebnis als biO (bedingt in Ordnung) gewertet, bei stärkerer Quellung ist das Ergebnis als niO (nicht in Ordnung) zu bewerten.

Das Auftreten von Blasen wird folgendermaßen durch eine Kombination von 2 Werten beurteilt:

- Die Anzahl der Blasen wird durch eine Mengenangabe von 0 bis 5 bewertet, wobei mit m1 sehr wenige und m5 sehr viele Blasen bezeichnet werden.
- Die Größe der Blasen wird durch eine Größenangabe ebenfalls von 1 bis 5 bewertet, wobei mit g1 sehr kleine und g5 sehr große Blasen bezeichnet wurden.

Die Bezeichnung m0g0 bedeutet demzufolge eine blasenfreie Lackierung nach Schwitzwasserlagerung und stellt bezüglich Blasenbildung ein iO-Ergebnis dar.

Zur Beurteilung der technologischen Eigenschaften der Mehrschichtaufbauten nach Schwitzwasserbelastung wurden Gitterschnitte nach DIN EN ISO 2409 durchgeführt (Note GT 0 bis GT 5; 0 = bester Wert; 5 = schlechtester Wert). Die Beurteilung der Mehrschichtlackierungen bzgl. Steinschlaghaftung erfolgt nach DIN EN ISO 20567-1, Verfahren B. Die Beurteilung des sich ergebenden Schadensbildes erfolgt ebenfalls nach DIN EN ISO 20567-1. Des Weiteren wurden Dampfstrahltests nach DIN 55662, Verfahren B durchgeführt. Das Anbringen der Ritze (Andreaskreuz) erfolgte dabei mit einem Ritzstichel nach Sikkens (siehe DIN EN ISO 17872 Anhang A). Die Beurteilung der Ergebnisse Dampf Strahltests wurde nach DIN 55662 durchgeführt, wobei insbesondere maximale Breite der Ablösungen in Millimetern bestimmt wurde.

Die Beurteilung des Verlaufes bzw. der Welligkeit der beschichteten Substrate wird mit einem Wave scan Messgerät der Firma Byk/Gardner durchgeführt. Zu diesem Zweck wird ein Laserstrahl unter einem Winkel von 60° auf die zu untersuchende Oberfläche gerichtet, und es werden auf einer Messstrecke von 10 cm die Schwankungen des reflektierten Lichts im sogenannten short wave-Bereich (0,3 bis 1,2 mm) und im sogenannten long wave-Bereich (1,2 bis 12 mm) mit Hilfe des Messgeräts registriert (long wave = LW; short wave = SW; je niedriger die Werte, desto besser ist das Erscheinungsbild). Außerdem wird als Maß der Schärfe eines in der Oberfläche des Mehrschichtaufbaus reflektierten Bildes mit Hilfe des Messgerätes die Kenngröße "distinctness of imgage" (DOI) bestimmt (je höher der Wert, desto besser ist das Erscheinungsbild).

**Beurteilung der Reparaturhaftungseigenschaften vor und nach Schwitzwasser**

Zur Beurteilung der Reparaturhaftungseigenschaften vor und nach Schwitzwasser werden Mehrschichtlackierungen nach den folgenden allgemeinen Vorschriften hergestellt:

<u>Originallackierung</u>

Auf einem mit einer gehärteten Elektrotauchlackierung (CathoGuard® 500 der BASF Coatings GmbH) beschichteten metallischen Substrat der Abmessung 10 x 20 cm wird der Wasserbasislack mittels Zweifachauftrag appliziert; die Applikation im ersten Schritt erfolgt elektrostatisch mit einer Zielschichtdicke von 8-9 μm, im zweiten Schritt wird nach einer 2-minüten Ablüftzeit bei Raumtemperatur pneumatisch mit einer Zielschichtdicke von 4-5 μm appliziert. Die resultierende Wasserbasislackschicht wird anschließend nach erneuter Ablüftzeit bei Raumtemperatur von 5 Minuten im Umluftofen für 5 Minuten bei 80 °C getrocknet. Auf die getrocknete Wasserbasislackschicht wird ein handelsüblicher Zweikomponenten-Klarlack (ProGloss der BASF Coatings GmbH) mit einer Zielschichtdicke von 40-45 μm appliziert. Die resultierende Klarlackschicht wird während 10 Minuten bei Raumtemperatur abgelüftet; anschließend erfolgt die Härtung im Umluftofen bei 140 °C für weitere 20 Minuten. Der so zu erhaltende Aufbau wird im Folgenden als Originallackierung bezeichnet (Aufbau a).

Alternativ wird die Aushärtung der Basislack- und Klarlackschicht bei 60 Minuten / 140 °C (im Folgenden als überbrannte Originallackierung bezeichnet; Aufbau b) bzw. bei 30 Minuten / 160 °C (im Folgenden als überbrannte Originallackierung bezeichnet; Aufbau c) durchgeführt.

Reparaturlackierung

Auf die Originallackierung bzw. alternativ auf die überbrannten Originallackierungen wird der Wasserbasislack wiederum mittels Zweifachauftrag appliziert, wobei die Applikation im ersten Schritt elektrostatisch (Zielschichtdicke von 8-9 μm und nach einer 2-minüten Ablüftzeit bei Raumtemperatur im zweiten Schritt pneumatisch (Zielschichtdicke von 4-5 μm) erfolgt. Die resultierende Wasserbasislackschicht wird anschließend nach erneuter 5-minütiger Ablüftzeit bei Raumtemperatur im Umluftofen für 10 Minuten bei 80 °C getrocknet. Auf diese getrocknete Wasserbasislackschicht wird ein handelsüblicher Zweikomponentenklarlack (ProGloss der BASF Coatings GmbH) mit einer Zielschichtdicke von 40-45 μm appliziert. Die resultierende Klarlackschicht wird 10 Minuten bei Raumtemperatur abgelüftet; anschließend erfolgt die Härtung im Umluftofen bei 140 °C für weitere 20 Minuten.
Der so zu erhaltende Aufbau wird im Folgenden als Reparaturlackierung bezeichnet; je nach Trocknungsbedingungen der Originallackierung ergeben sich drei verschiedene Mehrschichtaufbauten: Aufbau A ist eine Reparaturlackierung auf Aufbau a; Aufbau B ist eine Reparaturlackierung auf Aufbau b und Aufbau C ist eine Reparaturlackierung auf Aufbau c.

Zur Beurteilung der technologischen Eigenschaften der Mehrschichtaufbauten wurden Gitterschnitte nach DIN EN ISO 2409 durchgeführt (Note GT 0 bis GT 5; 0 = bester Wert; 5 = schlechtester Wert). Die Beurteilung der Mehrschichtlackierungen bzgl. Steinschlaghaftung erfolgt nach DIN EN ISO 20567-1, Verfahren B. Die Beurteilung des sich ergebenden Schadensbildes erfolgt ebenfalls nach DIN EN ISO 20567-1.
Zusätzlich werden entsprechende Proben mit den jeweiligen Mehrschichtaufbauten über einen Zeitraum von 10 Tagen in einer Klimakammer nach Prüfklima CH nach DIN EN ISO 6270-2:2005-09 gelagert. Anschließend werden die Bleche 24 Stunden nach Entnahme aus der Klimakammer bezüglich Gitterschnitt- und Steinschlaghaftung gemäß der bereits beschriebenen Methoden beurteilt.

**Bestimmung der Teilchengröße der Polymerisate in der wässrigen Dispersion**

Die Bestimmung der Teilchengröße der Polymerisate erfolgte mittels dynamischer Lichtstreuung nach DIN ISO 13321 (Oktober 2004)

**Bestimmung der Glasübergangstemperatur Glassübergangstemperatur Tg der Polymerisate**

Die Bestimmung der Glasübergangstemperatur Tg der Polymerisate erfolgte mittels DSC (Differental Scanning Calorimetry) gemäß DIN 53765 (März 1994).

**Bestimmung des Gehaltes an freien Isocyanatgruppen**

Die Ermittlung des Gehalts an freien Isocyanatgruppen, im Folgenden auch als NCO-Gehalt bezeichnet, wurde durch Zugabe eines Überschusses einer 2%igen N,N-Dibutylamin-Lösung in Xylol zu einer homogenen Lösung der Proben in Aceton / N-Ethylpyrrolidon (1:1 Vol.-%) durch potentiometrische Rücktitration des Amin-Überschusses mit einer 0,1N Salzsäure in Anlehnung an die DIN EN ISO 3251, DIN EN ISO 11909 und DIN EN ISO 14896 bestimmt. Über den Anteil eines Polymers (Festkörper) in Lösung kann auf den NCO-Gehalt des Polymerisats bezogen auf Festkörper zurückgerechnet werden.

**Ausführungsbeispiele**

Die nachfolgenden Beispiele und Vergleichsbeispiele dienen der Erläuterung der Erfindung, sind jedoch nicht einschränkend auszulegen.

Sofern nicht anders angeführt, handelt es sich bei den Angaben in Teilen um Gewichtsteile und bei Angaben in Prozenten jeweils um Gewichtsprozente.

1. Eingesetzte Komponenten

Die nachfolgend genannten und zur Herstellung der erfindungsgemäßen Dispersionen sowie der erfindungsgemäßen Wasserbasislacke enthaltend die erfindungsgemäßen Dispersionen als Bindemittel und der entsprechenden Vergleichsbeispiele eingesetzten Komponenten haben die folgende Bedeutung:

| | |
|---|---|
| VE-Wasser | deionisiertes Wasser |
| Rhodapex CO 436 | kommerziell erhältlicher Emulgator der Firma Solvay |
| APS | Ammoniumperoxodisulfat |
| 1,6-HDDA | 1,6-Hexandioldiacrylat |

| | |
|---|---|
| 2-HEA | 2-Hydroxyethylacrylat |
| MMA | Methacrylsäuremethylester |
| DMEA | Dimethylethanolamin |
| EF 800 | Aerosol® EF-800, kommerziell erhältlicher Emulgator der Firma Cytec |
| Dimerfettsäure | polymere Fettsäure (Dimerengehalt mindestens 98 Gew.-%, Trimerengehalt höchstens 2 Gew.-%, Monomerengehalt höchstens Spuren), z.B. Pripol® 1012 der Firma Croda) |
| PTHF | PolyTHF® 1000, erhältlich von BASF SE |
| MEK | Methylehtylketon |
| DMPA | Dimethylolpropionsäure |
| NCO | Isocyanat |
| TMXDI | m-Tetramethylxylylidendiisocyanat |
| IPDI | Isophorondiisocyanat |
| HBA | 4-Hydroxybutylacrylat |
| HEMA | 2-Hydroxyethylmethacrylat |
| TMP-Al | Trimethylolpropanmonoallylether, kommerziell erhältlich von der Firma Perstorp |

**2. Bespiele für Synthesen der wässrigen Dispersionen enthaltend mindestens ein mehrstufiges Polymerisat**

**2.1 Herstellung einer wässrigen Dispersion BM1 enthaltend ein dreistufiges Saat-Kern-Schale Polymerisat SCS1 (gemäß Korea Polym. J., Vol. 7, No. 4, S. 213-222; nicht erfindungsgemäß)**

Die Komponenten 1 bis 4 aus Tabelle 1.1 werden in einen Stahlreaktor (5 L Volumen) mit Rückflusskühler gegeben und auf 80°C aufgeheizt. Die Initiatorlösung (Tabelle 1.1, Position 5 und 6) wird innerhalb von 5 min in den Reaktor zu getropft. Im Anschluss wird 30 min gerührt.

Die in Tabelle 1.1 unter "Mono 1" angegebenen Komponenten werden in einem separaten Gefäß vorgemischt. Dieses Gemisch wird innerhalb von 2 Stunden in den Reaktor zu getropft. Im Anschluss wird 1 Stunde gerührt.

Die in Tabelle 1.1 unter "Mono 2" angegebenen Komponenten werden in einem separaten Gefäß vorgemischt. Dieses Gemisch wird innerhalb von 1 Stunde in den Reaktor zu getropft. Im Anschluss wird 1 Stunde gerührt.

Danach wird das Reaktionsgemisch auf 60°C abgekühlt und das Neutralisationsgemisch (Tabelle 1.1, Positionen 20 bis 22 in einem separaten Gefäß vorgemischt. Das Neutralisationsgemisch wird innerhalb von 40 min in den Reaktor zugetropft. Anschließend wird das Reaktionsprodukt noch 30 min gerührt, auf 25°C abgekühlt und filtriert.

**Tabelle 1.1: Wässrige Dispersion BM1 enthaltend das mehrstufige Polymerisat SCS1 (nicht erfindungsgemäß)**

| | | **BM1** |
|---|---|---|
| | **Vorlage** | |
| 1 | VE-Wasser | 43,54 |
| 2 | Rhodapex CO 436 | 0,16 |
| 3 | Styrol | 0,5 |
| 4 | Ethylacrylat | 0,55 |
| | **Initiatorlösung** | |
| 5 | VE-Wasser | 0,55 |
| 6 | APS | 0,02 |
| | **Mono 1** | |
| 7 | VE-Wasser | 13,31 |
| 8 | Rhodapex CO 436 | 0,13 |
| 9 | APS | 0,02 |
| 10 | Styrol | 5,84 |
| 11 | Ethylacrylat | 11,05 |
| 12 | 1,6-HDDA | 0,35 |

(fortgesetzt)

| | | |
|---|---|---|
| | **Mono 2** | |
| 13 | VE-Wasser | 5,97 |
| 14 | Rhodapex CO 436 | 0,06 |
| 15 | APS | 0,02 |
| 16 | Methacrylsäure | 0,74 |
| 17 | 2-HEA | 0,99 |
| 18 | Ethylacrylat | 3,04 |
| 19 | MMA | 0,6 |
| | **Neutralisation** | |
| 20 | VE-Wasser | 6,75 |
| 21 | Butylglykol | 4,96 |
| 22 | DMEA | 0,79 |
| | **pH-Wert** | 8,1 |

Der Festkörpergehalt betrug 23,4 %.

**Herstellung einer wässrigen Dispersion BM2 enthaltend ein dreistufiges Saat-Kern-Schale Polymerisat SCS2 (nicht erfindungsgemäß)**

Monomerenmischung (A), Stufe i.

80 Gew.-% der Positionen 1 und 2 aus Tabelle 1.2 werden in einen Stahlreaktor (5 L Volumen) mit Rückflusskühler gegeben und auf 80°C aufgeheizt. Die restlichen Anteile der unter "Vorlage" in Tabelle 1.2 aufgeführten Komponenten werden in einem separaten Gefäß vorgemischt. Dieses Gemisch und davon getrennt die Initiatorlösung (Tabelle 1.2, Position 5 und 6) werden zeitgleich innerhalb von 20 min in den Reaktor zu getropft, wobei in der Reaktionslösung ein Anteil der Monomere, bezogen auf die Gesamtmenge an in Stufe i. eingesetzten Monomeren, von 6,0 Gew.-% während der gesamten Reaktionsdauer nicht überschritten wird. Im Anschluss wird 30 min gerührt.

Monomerenmischung (B), Stufe ii.

Die in Tabelle 1.2 unter "Mono 1" angegebenen Komponenten werden in einem separaten Gefäß vorgemischt. Dieses Gemisch wird innerhalb von 2 Stunden in den Reaktor zu getropft, wobei in der Reaktionslösung ein Anteil der Monomere, bezogen auf die Gesamtmenge an in Stufe ii. eingesetzten Monomeren, von 6,0 Gew.-% während der gesamten Reaktionsdauer nicht überschritten wird. Im Anschluss wird 1 Stunde gerührt.

Monomerenmischung (C), Stufe iii.

Die in Tabelle 1.2 unter "Mono 2" angegebenen Komponenten werden in einem separaten Gefäß vorgemischt. Dieses Gemisch wird innerhalb von 1 Stunden in den Reaktor zu getropft, wobei in der Reaktionslösung ein Anteil der Monomere, bezogen auf die Gesamtmenge an in Stufe iii. eingesetzten Monomeren, von 6,0 Gew.-% während der gesamten Reaktionsdauer nicht überschritten wird. Im Anschluss wird 2 Stunden gerührt.

Danach wird das Reaktionsgemisch auf 60°C abgekühlt und das Neutralisationsgemisch (Tabelle 1.2, Positionen 20, 21 und 22) in einem separaten Gefäß vorgemischt. Das Neutralisationsgemisch wird innerhalb von 40 min in den Reaktor zu getropft, wobei der pH-Wert der Reaktionslösung auf einen pH-Wert von 7,5 bis 8,5 eingestellt wird. Anschließend wird das Reaktionsprodukt noch 30 min gerührt, auf 25°C abgekühlt und filtriert.

**Tabelle 1.2: Wässrige Dispersion BM2 enthaltend das mehrstufige Polymerisat SCS2 (nicht erfindungsgemäß)**

| | BM2 | BM2 |
|---|---|---|
| | **Vorlage** | |
| 1 | VE-Wasser | 41,81 |
| 2 | EF 800 | 0,18 |
| 3 | Styrol | 0,68 |
| 4 | n-Butylacrylat | 0,48 |
| | **Initiatorlösung** | |
| 5 | VE-Wasser | 0,53 |
| 6 | APS | 0,02 |
| | **Mono 1** | |
| 7 | VE-Wasser | 12,78 |
| 8 | EF 800 | 0,15 |
| 9 | APS | 0,02 |
| 10 | Styrol | 5,61 |
| 11 | n-Butylacrylat | 13,6 |
| 12 | 1,6-HDDA | 0,34 |
| | **Mono 2** | |
| 13 | VE-Wasser | 5,73 |
| 14 | EF 800 | 0,07 |
| 15 | APS | 0,02 |
| 16 | Methacrylsäure | 0,71 |
| 17 | 2-HEA | 0,95 |
| 18 | n-Butylacrylat | 3,74 |
| 19 | MMA | 0,58 |
| | **Neutralisation** | |
| 20 | VE-Wasser | 6,48 |
| 21 | Butylglykol | 4,76 |
| 22 | DMEA | 0,76 |

Der Festkörper wurde zur Reaktionskontrolle bestimmt. Dieser betrug 25,5 Gew.-%.

**2. Synthese der Polyurethane (P1), (P2), (P3), (P4) und (P5)**

*a) Herstellung der Polyesterdiole ED1 bis ED4*

Zur Synthese der Polyesterdiole wird wenigstens eine Polycarbonsäure und gegebenenfalls wenigstens ein organisches Lösemittel in einem Reaktionsgefäß mit Rührer, Rückflusskühler und Wasserabscheider vorgelegt. Die Vorlage wird mit wenigstens einem Polyol gemischt und solange unter Rühren auf eine Temperatur im Bereich von 160 bis 240 °C erhitzt, bis die gewünschte Menge an Wasser und gegebenenfalls vorhandenem organischem Lösemittel abgeschieden ist, welche den vollständigen oder gewünschten Umsatz anzeigt. Die Einzelkomponenten zur Synthese der verschiedenen Polyesterdiole ED1 bis ED4 sind in der nachfolgenden Tabelle 2.1 abgebildet.

**Tabelle 2.1: Zusammensetzung / Kennzahlen der Polyesterdiole ED1 bis ED4**

| | ED1 | ED2 | ED3 | ED4 |
|---|---|---|---|---|
| Adipinsäure | 34,30 | 32,90 | | |
| Isophthalsäure | 17,05 | 16,38 | | 12,04 |
| 1,6-Hexandiol | 44,84 | 38,27 | | 22,16 |
| Dimerfettsäure | | | 17,83 | 40,66 |
| PTHF | | | 61,56 | |
| Neopentylgykol | | 4,19 | | |
| Cyclohexan als Schleppmittel | 2,40 | 2,40 | 0,80 | 0,36 |
| MEK | 12,60 | 12,60 | | 24,79 |
| **Festkörper** [%] | 84 | 84 | 97 | 73 |
| **OH-Zahl** [mg KOH/g] | 52 | 52 | 50 | 75 |
| **Säurezahl** [mg KOH/g] | 2,6 | 1,6 | 2,5 | 3,5 |
| $M_n$ [g/mol] | 3230 | 2980 | 3450 | 1450 |

*b) Herstellung der Polyurethane (P1) bis (P5)*

Zur Synthese der Polyurethane (P) werden ein Polyesterdiol, DMPA sowie ein Diissocyanat zusammen mit einem inerten Lösungsmittel, wie beispielsweise MEK, in ein Reaktionsgefäß mit Rührer und Rückflusskühler eingewogen. Das Gemisch wird anschließend auf 80 C erhitzt. Diese Temperatur wird beibehalten, bis der gemessene Gehalt an freien Isocyanatgruppen konstant ist. Dies bedeutet, dass der Unterschied im NCO-Gehalt zwischen zwei aufeinanderfolgenden Messungen gleich oder weniger 0,04 % beträgt.

Anschließend wird bei 80 °C mit einer olefinisch ungesättigten Hydroxylverbindung (im 20%igen Überschuss) eine Kettenverlängerung durchgeführt. Die Zugabe erfolgt dabei innerhalb von 30 Minuten. Anschließend wird bei konstanter Temperatur so lange gerührt, bis ein Gehalt an freien Isocyanatgruppen von weniger als 0,01 Gew% erhalten wird. Eventuell noch vorhandene restliche Isocyanatgruppen werden dabei mit Butanol umgesetzt.

Anschließend wird DMEA bei 80 °C innerhalb von 30 Minuten gleichmäßig zugegeben und anschließend 1 Stunde homogenisiert, so dass ein Neutralisationsgrad von 80% erhalten wird. Danach wird die Mischung mit deionisiertem Wasser auf den entsprechenden Festkörper gemäß Tabelle 2.3 eingestellt, wobei das Wasser innerhalb von 90 Minuten gleichmäßig zugegeben wird. Nachdem wiederum eine Stunde homogenisiert wurde, wird das organische Lösemittel unter Vakuum bei 80 °C abdestilliert. Die Einzelkomponenten zur Synthese der verschiedenen Polyurethane (P1) bis (P5) sind in der nachfolgenden Tabelle 2.2 abgebildet.

**Tabelle 2.2: Synthese der Polyurethane (P1) (nicht erfindungsgemäß) und (P2), (P3), (P4) und (P5) (erfindungsgemäß)**

| | **Polyurethan (P1)** | **(P2)** | **(P3)** | **(P4)** | **(P5)** |
|---|---|---|---|---|---|
| **Polyesterdiol** | | | | | |
| **ED4** | 55,00 | 31,00 | | | |
| **ED1** | | | 20,00 | | |
| **ED2** | | | | 21,00 | |
| **ED3** | | | | | 20,38 |
| DMPA | 53,00 | 35,00 | 24,00 | 23,00 | 23,49 |
| **NCO-Komponente** | | | | | |
| TMXDI | | 88,00 | | | |
| IPDI | 133,40 | | 59,00 | 58,80 | 58,82 |
| **Kettenverlängerung** | | | | | |
| HEMA | 25,00 | | | | |

(fortgesetzt)

| | | | | |
|---|---|---|---|---|
| **Kettenverlängerung** | | | | |
| HBA | 43,00 | 27,00 | 27,00 | |
| TMP-Al | | | | 17,70 |
| **Neutralisation** | | | | |
| DMEA | Einstellen eines Neutralisationsgrades von 80% | | | |

**Tabelle 2.3: Kennzahlen der Polyurethane (P1) (nicht erfindungsgemäß) und (P2), (P3), (P4) und (P5) (erfindungsgemäß)**

| | **Polyurethan** | | | | |
|---|---|---|---|---|---|
| | **(P1)** | **(P2)** | **(P3)** | **(P4)** | **(P5)** |
| **Kennzahlen** | | | | | |
| Festkörpergehalt [%] | 29,0 | 34,5 | 30,1 | 29,9 | 27,6 |
| Säurezahl [mg KOH/g] | 30,4 | 37,5 | 18,9 | 17,7 | 22,0 |
| $M_n$ | 6107 | 3910 | 8411 | 4185 | 7310 |
| $M_w$ | 78000 | 14150 | 26020 | 13250 | 40090 |
| Polydispersität d | 12,8 | 3,6 | 3,1 | 3,2 | 5,5 |
| Teilchengröße $D_h$ [nm] | 119 | 83 | 103 | 101 | 42 |
| $T_g$ [°C] | -30 | -30 | -34 | -31 | n.b. |
| Oberflächenspannung [mN/m] | 38,4 | 43,2 | 46,8 | 49,5 | 40,9 |
| **n.b. = nicht bestimmt** | | | | | |

**3. Synthese der wässrigen Dispersionen BM3 und BM4 (nicht erfindungsgemäß) und BM5 bis BM9 (erfindungsgemäß) enthaltend ein Polymerisat enthaltend Polyurethane SCS3 und SCS4 bzw. SCS5 bis SCS9**

Monomerenmischung (A), Stufe i.

80 Gew.-% der Positionen 1 und 2 (2a bzw. 2b) aus Tabelle 3.1 werden in einen Stahlreaktor (5 L Volumen) mit Rückflusskühler gegeben und auf 80°C erhitzt. Die restlichen Anteile der unter "Vorlage" in Tabelle 3.1 aufgeführten Komponenten werden in einem separaten Gefäß vorgemischt. Dieses Gemisch und davon getrennt die Initiatorlösung (Tabelle 3.1, Position 6 und 7) werden zeitgleich innerhalb von 20 Minuten in den Reaktor zu getropft, wobei in der Reaktionslösung ein Anteil der Monomere, bezogen auf die Gesamtmenge an in Stufe i. eingesetzten Monomeren, von 6,0 Gew.-% während der gesamten Reaktionsdauer nicht überschritten wird. Im Anschluss wird 30 Minuten gerührt.

Monomerenmischung (B), Stufe ii.

Die in Tabelle 3.1 unter "Mono 1" angegebenen Komponenten werden in einem separaten Gefäß vorgemischt. Dieses Gemisch wird innerhalb von 2 Stunden in den Reaktor zu getropft, wobei in der Reaktionslösung ein Anteil der Monomere, bezogen auf die Gesamtmenge an in Stufe ii. eingesetzten Monomeren, von 6,0 Gew.-% während der gesamten Reaktionsdauer nicht überschritten wird. Im Anschluss wird 1 Stunde gerührt.

Monomerenmischung (C), Stufe iii.

Die in Tabelle 3.1 unter "Mono 2" angegebenen Komponenten werden in einem separaten Gefäß vorgemischt. Dieses Gemisch wird innerhalb von 1 Stunde in den Reaktor zu getropft, wobei in der Reaktionslösung ein Anteil der Monomere, bezogen auf die Gesamtmenge an in Stufe iii. eingesetzten Monomeren, von 6,0 Gew.-% während der gesamten Reaktionsdauer nicht überschritten wird. Im Anschluss wird 2 Stunden gerührt. Danach wird das Reaktionsgemisch auf 60°C abgekühlt und das Neutralisationsgemisch (Tabelle 3.1, Positionen 23, 24 und 25) in einem separaten Gefäß vorgemischt. Das Neutralisationsgemisch wird innerhalb von 40 Minuten in den Reaktor zu getropft, wobei der pH-Wert der Reaktionslösung auf einen Wert von 7,5 bis 9,5 eingestellt wird. Anschließend wird das Reaktionsprodukt noch 30 Minuten gerührt, auf 25°C abgekühlt und filtriert.

**Tabelle 3.1: Zusammensetzung der wässrigen Dispersionen BM3 und BM4 (nicht erfindungsgemäß) sowie BM5 bis BM9 (erfindungsgemäß) der die Polyurethane (P1) bis (P5) enthaltenden Polymerisate SCS3 und SCS 4 bzw. SCS5 bis SCS9**

| | | BM5 | BM8 | BM7 | BM6 | BM9 | BM3 | BM4 |
|---|---|---|---|---|---|---|---|---|
| | **Vorlage** | | | | | | | |
| 1 | VE-Wasser | 41,34 | 41,58 | 41,78 | 41,22 | 42,27 | 43,50 | 43,06 |
| 2 | *Emulgator* | | | | | | | |
| 2a | EF800 | 0,18 | 0,09 | 0,18 | 0,18 | 0,18 | 0,19 | 0,19 |
| 2b | (P4) | | 0,23 | | | | | |
| 3 | Styrol | 0,47 | 0,48 | 0,48 | 0,47 | 0,47 | 0,5 | 0,54 |
| 4 | n-Butylacrylat | 0,67 | 0,68 | 0,68 | 0,67 | 0,67 | | |
| 5 | Ethylacrylat | | | | | | 0,55 | 0,54 |
| | **Initiatorlösung** | | | | | | | |
| 6 | VE-Wasser | 0,52 | 0,53 | 0,53 | 0,52 | 0,52 | 0,55 | 0,54 |
| 7 | APS | 0,02 | 0,02 | 0,02 | 0,02 | 0,02 | 0,02 | 0,02 |
| | **Mono 1** | | | | | | | |
| 8 | VE-Wasser | 12,64 | 12,78 | 12,78 | 12,61 | 12,62 | 13,31 | 13,17 |
| 9 | *Emulgator* | | | | | | | |
| 9a | EF800 | 0,15 | 0,08 | 0,15 | 0,15 | 0,15 | 0,15 | 0,15 |
| 9b | (P4) | | 0,14 | | | | | |
| 10 | APS | 0,02 | 0,02 | 0,02 | 0,02 | 0,02 | 0,02 | 0,02 |
| 11 | Styrol | 5,55 | 5,61 | 5,61 | 5,53 | 5,54 | 5,84 | 5,78 |
| 12 | n-Butylacrylat | 13,46 | 13,6 | 13,6 | 13,42 | 13,43 | | |
| 13 | Ethylacrylat | | | | | | 11,05 | 10,94 |
| 14 | 1,6-HDDA | 0,34 | 0,34 | 0,34 | 0,34 | 0,34 | 0,35 | 0,35 |
| | **Mono 2** | | | | | | | |
| 15 | VE-Wasser | 5,67 | 5,73 | 5,73 | 5,65 | 5,66 | 5,97 | 5,91 |
| 16 | *Emulgator* | | | | | | | |
| 16a | (P2) | 1,16 | | 0,1 | | | | |
| 16b | (P5) | | | | 1,44 | | | |
| 16c | (P4) | | 0,05 | | | | | |
| 16d | (P3) | | | | | 1,32 | | |
| 16e | (P1) | | | | | | 0,11 | 1,14 |
| 16f | EF800 | | 0,03 | | | | | |
| 17 | APS | 0,02 | 0,02 | 0,02 | 0,02 | 0,02 | 0,02 | 0,02 |
| 18 | Methacrylsäure | 0,70 | 0,71 | 0,71 | 0,70 | 0,70 | 0,74 | 0,74 |
| 19 | 2-HEA | 0,94 | 0,95 | 0,95 | 0,94 | 0,94 | 0,99 | 0,99 |
| 20 | n-Butylacrylat | 3,70 | 3,70 | 3,74 | 3,69 | 3,69 | | |
| 21 | Ethylacrylat | | | | | | 3,04 | 3,04 |
| 22 | MMA | 0,58 | 0,57 | 0,58 | 0,57 | 0,57 | 0,6 | 0,6 |

(fortgesetzt)

| | Neutralisation | | | | | | | |
|---|---|---|---|---|---|---|---|---|
| 23 | VE-Wasser | 6,41 | 6,48 | 6,48 | 6,39 | 6,40 | 6,75 | 6,75 |
| 24 | Butylglykol | 4,71 | 4,76 | 4,76 | 4,70 | 4,70 | 4,96 | 4,96 |
| 25 | DMEA | 0,75 | 0,76 | 0,76 | 0,75 | 0,75 | 0,79 | 0,79 |

Zur Reaktionskontrolle wurde jeweils der Festkörpergehalt der jeweiligen wässrigen Dispersion bestimmt. Die Ergebnisse sind zusammen mit dem jeweiligen pH-Wert und den bestimmten Teilchengrößen der mehrstufigen Polymerisate in Tabelle 3.2 angegeben.

**Tabelle 3.2: Kennzahlen der wässrigen Dispersionen und der darin enthaltenen Polymerisate SCS3 und SCS4 (nicht erfindungsgemäß) und SCS5 bis SCS9 (erfindungsgemäß)**

| | BM5/ SCS5 | BM8/ SCS8 | BM7/ SCS7 | BM6/ SCS6 | BM9/ SCS9 | BM3/ SCS3 | BM4/ SCS4 |
|---|---|---|---|---|---|---|---|
| Festkörpergehalt [%] | 26,6 | 26,7 | 25,8 | 25,6 | 25,7 | 21,9 | 23 |
| pH-Wert | 8,45 | 9,09 | 8,57 | 8,85 | 9,05 | 8,35 | 7,76 |
| Teilchengröße [nm] | 240 | 309 | 236 | 246 | 230,7 | 182 | 201 |

**4. Beispiele für die Herstellung von Wasserbasislacken**

**4.1** Herstellung eines nicht erfindungsgemäßen Wasserbasislackes **WBL1** auf Basis einer nicht erfindungsgemäßen wässrigen Dispersion enthaltend ein mehrstufiges Polymerisat gemäß Korea Polym. J., Vol. 7, No. 4, S. 213-222 sowie der nicht erfindungsgemäßen Wasserbasislacke **WBL2** bis **WBL4** und der erfindungsgemäßen Wasserbasislacke **WBL5** und **WBL6**

Die in der Tabelle 4.1 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 85±5 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 4.1: Herstellung der Wasserbasislacke WBL1 bis WBL4 (nicht erfindungsgemäß) sowie WBL5 und WBL6 (erfindungsgemäß)**

| | WBL1 | WBL2 | WBL3 | WBL4 | WBL5 | WBL6 |
|---|---|---|---|---|---|---|
| **Wässrige Phase:** | | | | | | |
| 3%ige Na-Mg-Schichtsilikatlösung | 10,00 | 10,00 | 10,00 | 10,00 | 10,00 | 10,00 |
| Wässrige Dispersion **BM1** (gemäß Korea Polym. J., Vol. 7, No. 4, S. 213-222) | 28,40 | | | | | |
| Wässrige Dispersion **BM2** | | 25,95 | | | | |
| Wässrige Dispersion **BM3** | | | 30,30 | | | |
| Wässrige Dispersion **BM4** | | | | 28,50 | | |
| Wässrige Dispersion **BM5** | | | | | 24,95 | |
| Wässrige Dispersion **BM6** | | | | | | 25,55 |
| deionisiertes Wasser | 30,30 | 32,75 | 27,90 | 29,70 | 33,25 | 33,15 |

(fortgesetzt)

| | WBL1 | WBL2 | WBL3 | WBL4 | WBL5 | WBL6 |
|---|---|---|---|---|---|---|
| **Wässrige Phase:** | | | | | | |
| Polyester; hergestellt gemäß Beispiel D, Spalte 16, Z. 37-59 der DE 40 09 858 A1 | 2,70 | 2,70 | 2,70 | 2,70 | 2,70 | 2,70 |
| n-Butoxipropanol | 3,20 | 3,20 | 3,20 | 3,20 | 3,20 | 3,20 |
| Melaminformaldehydharz (Cymel® 303 der Firma Allnex) | 3,20 | 3,20 | 3,20 | 3,20 | 3,20 | 3,20 |
| 10%iges Dimethylethanolamin in Wasser | 2,30 | 2,30 | 2,30 | 2,30 | 2,30 | 2,30 |
| Polyurethanmodifiziertes Polyacrylat, hergestellt gemäß S. 7, Z. 55 bis S.8, Z. 23 der DE 4437535 A1 | 3,60 | 3,60 | 3,60 | 3,60 | 3,60 | 3,60 |
| Rheovis® AS 1130, erhältlich von BASF SE | 1,50 | 1,50 | 2,00 | 2,00 | 2,00 | 1,50 |
| | | | | | | |
| **Organische Phase:** | | | | | | |
| Butylglykol | 7,00 | 7,00 | 7,00 | 7,00 | 7,00 | 7,00 |
| Pluriol® E300 der Firma BASF SE | 2,80 | 2,80 | 2,80 | 2,80 | 2,80 | 2,80 |
| Aluminiumpigment, erhältlich von Firma Altana-Eckart **(Alu Stapa Hydrolux 8154)** | 5,00 | 5,00 | 5,00 | 5,00 | 5,00 | 5,00 |
| | | | | | | |
| **Summe:** | **100,00** | **100,00** | **100,00** | **100,00** | **100,00** | **100,00** |

**4.2** Herstellung eines nicht erfindungsgemäßen Wasserbasislackes **WBL7** auf Basis einer nicht erfindungsgemäßen wässrigen Dispersion **BM1** enthaltend ein mehrstufiges Polymerisat gemäß Korea Polym. J., Vol. 7, No. 4, S. 213-222 sowie der nicht erfindungsgemäßen Wasserbasislacke **WBL8, WBL9** und **WBL12** und der erfindungsgemäßen Wasserbasislacke **WBL10, WBL11** und **WBL13**

Die in der Tabelle 4.2 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 95 $\pm$5 mPa·s (WBL7) bzw. 120 $\pm$5 mPa·s (WBL8-WBL11) bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 4.2: Herstellung der Wasserbasislacke WBL7 bis WBL9 (nicht erfindungsgemäß) sowie WBL10 und WBL11 (erfindungsgemäß)**

| | WBL7 | WBL8 | WBL9 | WBL10 | WBL11 |
|---|---|---|---|---|---|
| **Wässrige Phase:** | | | | | |
| Wässrige Dispersion **BM1** (gemäß Korea Polym. J., Vol. 7, No. 4, S. 213-222) | 28,40 | | | | |
| Wässrige Dispersion **BM3** | | 30,30 | | | |
| Wässrige Dispersion **BM4** | | | 28,50 | | |
| Wässrige Dispersion **BM5** | | | | 24,95 | |
| Wässrige Dispersion **BM7** | | | | | 25,75 |
| deionisiertes Wasser | 34,80 | 31,90 | 33,70 | 37,25 | 36,45 |

(fortgesetzt)

| | WBL7 | WBL8 | WBL9 | WBL10 | WBL11 |
|---|---|---|---|---|---|
| **Wässrige Phase:** | | | | | |
| Polyester; hergestellt gemäß Beispiel D, Spalte 16, Z. 37-59 der DE 40 09 858 A1 | 2,70 | 2,70 | 2,70 | 2,70 | 2,70 |
| n-Butoxipropanol | 3,20 | 3,20 | 3,20 | 3,20 | 3,20 |
| Melaminformaldehydharz (Cymel® 303 der Firma Allnex) | 3,20 | 3,20 | 3,20 | 3,20 | 3,20 |
| 10%iges Dimethylethanolamin in Wasser | 2,30 | 3,30 | 3,30 | 3,30 | 3,30 |
| Polyurethanmodifiziertes Polyacrylat; hergestellt gemäß S. 7, Z. 55 bis S.8, Z. 23 der DE 4437535 A1 | 3,60 | 3,60 | 3,60 | 3,60 | 3,60 |
| Rheovis® AS 1130, erhältlich von BASF SE | 1,00 | 1,00 | 1,00 | 1,00 | 1,00 |
| Aquatix® 8421, erhältlich von BYK-Chemie GmbH | 2,00 | 2,00 | 2,00 | 2,00 | 2,00 |
| Aquacer® 526, erhältlich von BYK-Chemie GmbH | 3,00 | 3,00 | 3,00 | 3,00 | 3,00 |
| 50 Gew.-%ige Lösung von Rheovis® PU1250 in Butylglykol (Rheovis® PU1250 erhältlich von BASF SE) | 1,00 | 1,00 | 1,00 | 1,00 | 1,00 |
| | | | | | |
| **Organische Phase:** | | | | | |
| Butylglykol | 7,00 | 7,00 | 7,00 | 7,00 | 7,00 |
| Pluriol® E300 der Firma BASF SE | 2,80 | 2,80 | 2,80 | 2,80 | 2,80 |
| Aluminiumpigment, erhältlich von Firma Altana-Eckart **(Alu Stapa Hydrolux 8154)** | 5,00 | 5,00 | 5,00 | 5,00 | 5,00 |
| | | | | | |
| **Summe:** | **100,00** | **100,00** | **100,00** | **100,00** | **100,00** |

**4.3** Herstellung eines nicht erfindungsgemäßen Wasserbasislackes **WBL12** sowie der erfindungsgemäßen Wasserbasislackes **WBL13** und **WBL14**

Die in der Tabelle 4.3 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von $75 \pm 5$ mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 4.3: Herstellung der Wasserbasislacke WBL12 (nicht erfindungsgemäß) sowie WBL13 und WBL14 (erfindungsgemäß)**

| | WBL12 | WBL13 | WBL14 |
|---|---|---|---|
| **Wässrige Phase:** | | | |
| 3%ige Na-Mg-Schichtsilikatlösung | 10,00 | 10,00 | 10,00 |
| Wässrige Dispersion **BM2** | 31,00 | | |
| Wässrige Dispersion **BM8** | | 29,60 | |

(fortgesetzt)

| | WBL12 | WBL13 | WBL14 |
|---|---|---|---|
| **Wässrige Phase:** | | | |
| Wässrige Dispersion **BM9** | | | 30,75 |
| deionisiertes Wasser | 33,80 | 35,20 | 34,05 |
| Polyester; hergestellt gemäß Beispiel D, Spalte 16, Z. 37-59 der DE 40 09 858 A1 | 2,70 | 2,70 | 2,70 |
| n-Butoxipropanol | 3,20 | 3,20 | 3,20 |
| Melaminformaldehydharz (Cymel® 303 der Firma Allnex) | 3,20 | 3,20 | 3,20 |
| 10%iges Dimethylethanolamin in Wasser | 0,30 | 0,30 | 0,30 |
| Rheovis® AS 1130, erhältlich von BASF SE | 1,00 | 1,00 | 1,00 |
| | | | |
| **Organische Phase:** | | | |
| Butylglykol | 7,00 | 7,00 | 7,00 |
| Pluriol® E300 der Firma BASF SE | 2,80 | 2,80 | 2,80 |
| Aluminiumpigment, erhältlich von Firma Altana-Eckart **(Alu Stapa Hydrolux 8154)** | 5,00 | 5,00 | 5,00 |
| | | | |
| **Summe:** | **100,00** | **100,00** | **100,00** |

**4.4** Herstellung eines nicht erfindungsgemäßen Wasserbasislackes **WBL15** sowie eines erfindungsgemäßen Wasserbasislackes **WBL16**

Die in der Tabelle 4.4 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 80±5 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 4.4: Herstellung der Wasserbasislacke WBL15 (nicht erfindungsgemäß) sowie WBL16 (erfindungsgemäß)**

| | WBL15 | WBL16 |
|---|---|---|
| **Wässrige Phase:** | | |
| 3%ige Na-Mg-Schichtsilikatlösung | 19,10 | 19,10 |
| deionisiertes Wasser | 23,15 | 23,15 |
| n-Butoxipropanol | 1,52 | 1,52 |
| 1-Propoxy-2-propanol | 2,03 | 2,03 |
| Isobutanol | 2,58 | 2,58 |
| 2-Ethylhexanol | 2,31 | 2,31 |
| Wässrige Dispersion **BM2** | 23,99 | |
| Wässrige Dispersion **BM6** | | 23,99 |
| Polyester; hergestellt gemäß Beispiel D, Spalte 16, Z. 37-59 der DE 40 09 858 A1 | 2,40 | 2,40 |

(fortgesetzt)

| | WBL15 | WBL16 |
|---|---|---|
| **Wässrige Phase:** | | |
| Rheovis® AS 1130, erhältlich von BASF SE | 0,60 | 0,60 |
| Melaminformaldehydharz (Resimene® 755 der Firma Ineos) | 3,14 | 3,14 |
| 10%iges Dimethylethanolamin in Wasser | 0,65 | 0,65 |
| Pluriol® P900, erhältlich von BASF SE | 0,92 | 0,92 |
| Polyurethanmodifiziertes Polyacrylat; hergestellt gemäß S. 7, Z. 55 bis S. 8, Z. 23 der DE 4437535 A1 | 3,51 | 3,51 |
| 50 Gew.-%ige Lösung von Rheovis® PU1250 in Butylglykol (Rheovis® PU1250 erhältlich von BASF SE) | 0,46 | 0,46 |
| Tinuvin® 384-2, erhältlich von BASF SE | 0,74 | 0,74 |
| Tinuvin® 123, erhältlich von BASF SE | 0,37 | 0,37 |
| Byketol®-WS der Firma Altana/BYK-Chemie GmbH | 0,92 | 0,92 |
| | | |
| **Organische Phase:** | | |
| Mischung zweier handelsüblicher Aluminiumpigmente, erhältlich von Firma Altana-Eckart (**Alu Stapa Hydrolux 2192 & 2197** im Verhältnis 2,5:1,0) | 4,52 | 4,52 |
| Butylglykol | 5,17 | 5,17 |
| Polyester; hergestellt gemäß Beispiel D, Spalte 16, Z. 37-59 der DE 40 09 858 A1 | 1,75 | 1,75 |
| 10%iges Dimethylethanolamin in Wasser | 0,18 | 0,18 |
| | | |
| **Summe:** | **100,00** | **100,00** |

Tabelle 4.5 fasst die Zusammensetzung der Wasserbasislacke **WBL1** bis **WBL16** hinsichtlich der eingesetzten mehrstufig hergestellten Polymerisate zusammen.

**Tabelle 4.5: Zusammensetzungen der Wasserbasislacke WBL1 bis WBL16**

| Wasserbasislack | Polymerisat | erfindungs-gemäß | nicht erfindungs-gemäß |
|---|---|---|---|
| **WBL1** | **SCS1** (gemäß Korea Polym. J., Vol. 7, No. 4, S. 213-222) | | **X** |
| **WBL2** | **SCS2** | | **X** |
| **WBL3** | **SCS3** | | **X** |
| **WBL4** | **SCS4** | | **X** |
| **WBL5** | **SCS5** | **X** | |
| **WBL6** | **SCS6** | **X** | |
| **WBL7** | **SCS1** (gemäß Korea Polym. J., Vol. 7, No. 4, S. 213-222) | | **X** |
| **WBL8** | **SCS3** | | **X** |
| **WBL9** | **SCS4** | | **X** |

(fortgesetzt)

| Wasserbasislack | Polymerisat | erfindungs-gemäß | nicht erfindungs-gemäß |
|---|---|---|---|
| **WBL10** | **SCS5** | **X** | |
| **WBL11** | **SCS7** | **X** | |
| **WBL12** | **SCS2** | | **X** |
| **WBL13** | **SCS8** | **X** | |
| **WBL14** | **SCS9** | **X** | |
| **WBL15** | **SCS2** | | **X** |
| **WBL16** | **SCS6** | **X** | |

### 5.1 Vergleich zwischen den Wasserbasislacken WBL1 bis WBL6 hinsichtlich der Eigenschaften nach Schwitzwasserbelastung sowie der Reparaturhaftung vor und nach Schwitzwasser

Eine Beurteilung der Schwitzwasserempfindlichkeit für die Wasserbasislacke **WBL1** bis **WBL4** (enthaltend nicht erfindungsgemäße mehrstufige Polymerisate) sowie **WBL5** und **WBL6** (jeweils enthaltend ein erfindungsgemäßes mehrstufiges Polymerisat) bzw. der Reparaturhaftung vor und nach Schwitzwasserbelastung für die Lacke **WBL1** und **WBL6** erfolgte gemäß vorstehend beschriebener Methoden. Die Ergebnisse sind in den Tabellen 5.1 sowie 5.2 zusammengefasst.

**Tabelle 5.1: Einfluss von Schwitzwasser auf Verlauf, Haftung, Quellung sowie Blasenbildung der Mehrschichtaufbauten**

| Wasserbasislack | | | | | | |
|---|---|---|---|---|---|---|
| **Nach Schwitzwasserbelastung** | **WBL1** | **WBL2** | **WBL3** | **WBL4** | **WBL5** | **WBL6** |
| LW: | 2,3 | 5,8 | 9,3 | 8,0 | 4,7 | 2,5 |
| SW: | 18,5 | 27,0 | 29,5 | 30,4 | 19 | 9,9 |
| DOI: | 82,2 | 82,3 | 80,4 | 77,5 | 85,2 | 88,2 |
| Quellung: | biO | iO | biO | niO | iO | iO |
| Blasenbildung: | m1/g1 | m0/g0 | m0/g0 | m0/g0 | m0/g0 | m0/g0 |
| Haftung (Gitterschnitt): | GT0 | GT0 | GT3-4 | GT0 | GT0 | GT0 |

Die Ergebnisse belegen, dass der Einsatz der nicht erfindungsgemäßen Dispersion **BM1 (WBL1),** hergestellt gemäß Korea Polym. J., Vol. 7, No. 4, S. 213-222, zu leichter Blasenbildung im Schwitzwassertest führt. Bei Einsatz der nicht erfindungsgemäßen wässrigen Dispersion **BM2 (WBL2)** wird diese Problematik nicht beobachtet, jedoch wird ein hoher short wave-Wert als Indikator für einen nicht ausreichenden Verlauf gefunden. Die Mehrschichtaufbauten **WBL3** und **WBL4,** enthaltend die nicht erfindungsgemäße wässrige Dispersion **BM3** und **BM4,** bei denen die mehrstufige Polymerisate **SCS3** und **SCS4** unter Einsatz eines Polyurethans hergestellt wurden, zeigen eine mittlere bis starke Quellung sowie im Falle der wässrigen Dispersion **BM3** darüber hinaus Haftungsprobleme.
Beim Einsatz der erfindungsgemäßen wässrigen Dispersionen **BM5** und **BM6** enthaltend mehrstufig hergestellte Polymerisate, bei denen in der Herstellung ein Polyurethan mit einer entsprechenden Oberflächenflächenspannung und einer entsprechenden Polydispersität verwendet wurde, werden sehr gute Verlaufswerte sowie keine Probleme hinsichtlich Haftung, Quellung oder Blasenbildung beobachtet.

**Tabelle 5.2: Reparaturhaftung vor und nach Schwitzwasserbelastung**

| Reparaturhaftung vor Schwitzwasserbelastung | | |
|---|---|---|
| **Einbrennbedingung Klarlack im Originalaufbau** | **WBL1** | **WBL6** |
| A: Standard (140 °C / 20 Minuten) | GT1 | GT0 |
| B: überbrannt (140 °C / 60 Minuten) | GT2 | GT1 |
| Reparaturhaftung nach Schwitzwasserbelastung | | |
| **Einbrennbedingung Klarlack im Originalaufbau** | **WBL1** | **WBL6** |
| A: Standard (140 °C / 20 Minuten) | GT4 | GT0 |
| B: überbrannt (140 °C / 60 Minuten) | GT1 | GT1 |

Es zeigte sich, dass die erfindungsgemäße Beschichtungszusammensetzung **WBL6,** enthaltend die erfindungsgemäße wässrige Dispersion BM6 gegenüber der nicht erfindungsgemäßen Beschichtungszusammensetzung **WBL1,** enthaltend die nicht erfindungsgemäße wässrige Dispersion **BM1** Vorteile in der Reparaturhaftung, insbesondere nach Schwitzwasserbelastung bei Standardeinbrennbedingungen des Klarlackes aufweist (siehe Tabelle 5.2).

**5.2 Vergleich zwischen den Wasserbasislacken WBL7 bis WBL11 hinsichtlich der Eigenschaften nach Schwitzwasserbelastung sowie der Nadelstichsensitivität**

Die Wasserbasislacke **WBL7** bis **WBL9** (nicht erfindungsgemäß) sowie **WBL10** und **WBL11** wurden hinsichtlich der Schwitzwasserbeständigkeit, die Lacke **WBL8** und **WBL10** darüber hinaus hinsichtlich ihrer Nadelstichsensitivität gemäß vorstehend beschriebener Methoden untersucht. Die Ergebnisse sind in den Tabellen 5.3 und 5.4 zusammengefasst.

**Tabelle 5.3: Einfluss von Schwitzwasser auf Verlauf, Haftung, Quellung sowie Blasenbildung der Mehrschichtaufbauten (WBL7 bis WBL11)**

| | Wasserbasislack | | | | |
|---|---|---|---|---|---|
| **Nach Schwitzwasserbelastung** | **WBL7** | **WBL8** | **WBL9** | **WBL10** | **WBL11** |
| LW: | 2 | 18,7 | 15,9 | 4,2 | 3,3 |
| SW: | 17,6 | 31,1 | 39,6 | 23,6 | 19,3 |
| DOI: | 87,1 | 81,6 | 74,6 | 86 | 86,7 |
| Quellung: | iO | niO | niO | iO | iO |
| Blasenbildung : | m1/g2 | m3/g1 | m4/g2 | m0/g0 | m0/g0 |
| Haftung (Gitterschnitt): | GT0 | GT1-2 | GT0 | GT0 | GT0 |

Die Ergebnisse belegen, dass der Einsatz der nicht erfindungsgemäßen wässrigen Dispersionen BM1, BM3 und BM4 zu Blasenbildung und teilweise darüber hinaus zu nicht akzeptabler Quellung und/oder Haftungsproblemen führt. Bei Einsatz der erfindungsgemäßen wässrigen Dispersionen **BM5** und **BM7** kann jedoch kein negativer Einfluss durch Schwitzwasserbelastung festgestellt werden.

**Tabelle 5.4: Ergebnisse der Untersuchungen hinsichtlich Nadelstichen**

| Anzahl Nadelstiche (normiert auf 200 $cm^2$): | | |
|---|---|---|
| | Wasserbasislack | |
| Schichtdickenbereich Klarlackkeil | **WBL8** | **WBL10** |
| 20-30 $\mu$m | >150 | 0 |
| 30-40 $\mu$m | >150 | 0 |

(fortgesetzt)

| Anzahl Nadelstiche (normiert auf 200 $cm^2$): | | |
|---|---|---|
| | Wasserbasislack | |
| Schichtdickenbereich Klarlackkeil | **WBL8** | **WBL10** |
| **Summe** | **>300** | **0** |

Die erfindungsgemäße Beschichtungszusammensetzung **WBL10,** enthaltend die erfindungsgemäße wässrige Dispersion **BM5**, weist eine deutliche bessere Nadelstichrobustheit im Vergleich zum Wasserbasislack **WBL8** auf Basis der nicht erfindungsgemäßen wässrigen Dispersion **BM3** auf.

**5.3 Vergleich zwischen dem nicht erfindungsgemäßen Wasserbasislack WBL12 sowie den erfindungsgemäßen Wasserbasislacken WBL13 und WBL14 hinsichtlich Lagerstabilität, Kochern, Läufern, Farbton (Flop-Index) und Eigenschaften nach Schwitzwasserbelastung**

Die Untersuchungen an den Wasserbasislacken **WBL12** (nicht erfindungsgemäß, enthaltend die nicht erfindungsgemäße wässrige Dispersion BM2 sowie **WBL13** und **WBL14** (erfindungsgemäß, enthaltend die erfindungsgemäße wässrige Dispersion BM8 bzw. BM9, jeweils auf Basis eines Polyurethans (P)) erfolgten gemäß der vorstehend beschriebenen Methoden. Die Tabellen 5.5 bis 5.8 fassen die Ergebnisse zusammen.

**Tabelle 5.5: Ergebnisse der Untersuchungen hinsichtlich Lagerstabilität**

| | | Wasserbasislack | | |
|---|---|---|---|---|
| | | **WBL12** | **WBL13** | **WBL14** |
| Niederscherviskosität ($1s^{-1}$) in mPa·s | frisch | 1266 | 1288 | 1644 |
| | nach 2 Wochen Lagerung bei 40 °C | 2221 | 1196 | 1277 |
| | Veränderung [%] | 75% | -7% | -22% |
| | | | | |
| Hochscherviskosität ($1000\ s^{-1}$) in mPa·s | frisch | 66 | 66 | 69 |
| | nach 2 Wochen Lagerung bei 40 | 83 | 72 | 69 |
| | Veränderung [%] | 26% | 9% | 0% |

**WBL13** und **WBL14** auf Basis der erfindungsgemäßen mehrstufigen Polymerisate auf Basis eines olefinisch ungesättigten Polyurethans weisen eine höhere Lagerstabilität als **WBL12** auf, welcher ein nicht erfindungsgemäßes mehrstufiges Polymerisat enthält (hergestellt ohne olefinisch ungesättigtes Polyurethan).

**Tabelle 5.6: Ergebnisse der Untersuchungen hinsichtlich Kochern und Läufern**

| | Wasserbasislack | | |
|---|---|---|---|
| | **WBL12** | **WBL13** | **WBL14** |
| **Läufer-/ Kochergrenze** | | | |
| Läufergrenze | >26 µm | > 28 µm | > 29 µm |
| Kochergrenze | > 29 µm | > 28 µm | > 29 µm |

Alle untersuchten Mehrschichtaufbauten waren frei von Kochern und Läufern; auch bei maximaler Schichtdicke des Keilaufbaus waren noch keine Tendenzen für die Ausbildung von Läufern oder Kochern zu beobachten.

**Tabelle 5.7: Ergebnisse der Untersuchungen hinsichtlich des Farbtons (winkelabhängige Helligkeit bzw. Flop-Index)**

| | Wasserbasislack | | |
|---|---|---|---|
| | **WBL12** | **WBL13** | **WBL14** |
| $L^*_{15°}$ | 132,2 | 131,0 | 132,3 |
| $L^*_{25°}$ | 105,8 | 106,1 | 105,9 |
| $L^*_{45°}$ | 63,7 | 64,9 | 63,6 |
| $L^*_{75°}$ | 39,4 | 40,0 | 39,9 |
| $L^*_{110°}$ | 32,8 | 33,2 | 33,3 |
| **Flop-Index** | **12,5** | **12,0** | **12,4** |

Alle Mehrschichtaufbauten liegen hinsichtlich des Farbtons bzw. der winkelabhängigen Helligkeit auf einem vergleichbaren Niveau; der Einsatz eines olefinisch ungesättigten Polyurethans bei der Herstellung eines mehrstufigen Polymerisats führt also nicht zu einem Einfluss auf die Orientierung der Effektpigmente und damit des Farbtons.

**Tabelle 5.8: Einfluss von Schwitzwasser auf Verlauf, Haftung, Quellung sowie Blasenbildung der Mehrschichtaufbauten**

| | Wasserbasislack | | |
|---|---|---|---|
| **Nach Schwitzwasserbelastung** | **WBL12** | **WBL13** | **WBL14** |
| LW: | 4,5 | 4,6 | 4,5 |
| SW: | 19,5 | 17,6 | 17,6 |
| DOI: | 85,4 | 86,8 | 86,9 |
| Quellung: | iO | iO | iO |
| Blasenbildung : | m0/g0 | m0/g0 | m0/g0 |
| Haftung (Gitterschnitt): | GT0 | GT0 | GT0 |

Bei Einsatz der erfindungsgemäßen wässrigen Dispersionen **BM8 (WBL13)** bzw. **BM9 (WBL14)** wird im Vergleich zum Wasserbasislack **WBL12,** enthaltend das nicht erfindungsgemäße mehrstufige Polymerisat SCS2 hergestellt ohne olefinisch ungesättigten Polyurethans, wird ein besserer Verlauf nach Schwitzwasserbelastung beobachtet. Blasenbildung, Quellung oder Haftungsprobleme treten bei keiner der untersuchten Proben auf.

### 5.4 Vergleich zwischen dem nicht erfindungsgemäßen Wasserbasislack WBL15 sowie dem erfindungsgemäßen Wasserbasislack WBL16 hinsichtlich (Reparatur-)Haftung vor und nach Schwitzwasserbelastung

Die Untersuchungen der Haftungs- bzw. Reparaturhaftungseigenschaften vor und nach Schwitzwasserbelastung der Wasserbasislacke **WBL15** (nicht erfindungsgemäß, enthaltend die wässrige Dispersion **BM2,** mehrstufiges Polymerisat hergestellt ohne olefinisch ungesättigten Polyurethans) sowie **WBL16** (erfindungsgemäß, enthaltend die wässrige Dispersion **BM6,** mehrstufiges Polymerisat hergestellt mit olefinisch ungesättigtem Polyurethan) erfolgten gemäß der vorstehend beschriebenen Methoden. Die Tabellen 5.9 und 5.10 fassen die Ergebnisse zusammen.

**Tabelle 5.9: Einfluss von Schwitzwasser auf Haftung**

| | **WBL15** | **WBL16** |
|---|---|---|
| **Haftung nach Schwitzwasserlagerung** | | |
| Gitterschnitt | GT0 | GT0 |
| Dampfstrahl | 0 | 0 |
| Steinschlag | 1,5 | 1,5 |

Hinsichtlich der Haftung (Gitterschnitt, Dampfstrahl sowie Steinschlag) nach Schwitzwasserbelastung sind keine Unterschiede zwischen den beiden Mehrschichtaufbauten zu erkennen; sowohl **WBL15** als auch **WBL16** zeigen sehr gute Eigenschaften.

**Tabelle 5.10: Reparaturhaftung vor und nach Schwitzwasserbelastung**

| Reparaturhaftung vor Schwitzwasserlagerung | | |
|---|---|---|
| **Einbrennbedingung Klarlack** | | |
| C: überbrannt / unterbrannt (160 °C / 30 Minuten Erstlackierung & 125 °C / 22 Minuten Reparaturlackierung) | **WBL15** | **WBL16** |
| Gitterschnitt | GT0 | GT0 |
| Steinschlag | 2 | 1,5 |
| | | |
| Reparaturhaftung nach Schwitzwasserlagerung | | |
| **Einbrennbedingung Klarlack** | | |
| C: überbrannt / unterbrannt (160 °C / 30 Minuten Erstlackierung & 125 °C / 22 Minuten Reparaturlackierung) | **WBL15** | **WBL16** |
| Gitterschnitt | GT0 | GT0 |
| Steinschlag | 1,5 | 1,5 |

Bei der Reparaturhaftung wird für die erfindungsgemäße wässrige Dispersion BM6 ein Vorteil im Steinschlag vor Schwitzwasserbelastung beobachtet.

## Patentansprüche

1. Wässrige Dispersion enthaltend ein Polymerisat SCS,
hergestellt durch die aufeinanderfolgende radikalische Emulsionspolymerisation von drei voneinander verschiedenen Monomerenmischungen (A), (B) und (C) von olefinisch ungesättigten Monomeren,
**dadurch gekennzeichnet, dass**
mindestens eine der Monomerenmischungen (A), (B) oder (C) mindestens ein wenigstens eine olefinisch ungesättigte Gruppe aufweisendes Polyurethan (P) enthält,
wobei vor Zumischung des Polyurethans (P) zu wenigstens einer der Monomerenmischungen (A), (B) und (C)
die Monomerenmischung (A) mindestens 50 Gew.-% von Monomeren mit einer Löslichkeit in Wasser von kleiner als 0,5 g/l bei 25 °C enthält und ein Polymerisat (a), welches aus der Mischung (A) hergestellt wird, eine Glasübergangstemperatur von 10 bis 65 °C besitzt,
die Monomerenmischung (B) mindestens ein mehrfach ungesättigtes Monomer enthält und ein Polymerisat (b), welches aus der Mischung (B) hergestellt wird, eine Glasübergangstemperatur von -35 bis 15°C besitzt,
ein Polymerisat (c), welches aus der Monomerenmischung (C) hergestellt wird, eine Glasübergangstemperatur von -50 bis 15 °C besitzt,
und wobei

    i. zunächst die Monomerenmischung (A) polymerisiert wird,
    ii. dann die Monomerenmischung (B) in Gegenwart des unter i. hergestellten Polymerisats polymerisiert wird, und
    iii. danach die Monomerenmischung (C) in Gegenwart des unter ii. hergestellten Polymerisats polymerisiert wird,

   und
das Polyurethan (P) eine Oberflächenflächenspannung im Bereich von 40 mN/m bis 55 mN/m bei 23 °C aufweist und
eine Polydispersität d von kleiner 10 besitzt.

2. Wässrige Dispersion nach Anspruch 1, **dadurch gekennzeichnet, dass** der Anteil des Polyurethans (P) von 0,05

bis 1,8 Gew.-% bezogen auf den Festkörpergehalt der wässrigen Dispersion beträgt.

3. Wässrige Dispersion nach einem der Ansprüche 1 bis 2, **dadurch gekennzeichnet, dass** der Anteil der Monomerenmischung (A) von 0,1 bis 10 Gew.-%, der Anteil der Monomerenmischung (B) von 60 bis 80 Gew.-% und der Anteil der Monomerenmischung (C) von 10 bis 30 Gew.-%, jeweils bezogen auf die Summe der Einzelmengen der Mischungen (A), (B) und (C), beträgt.

4. Wässrige Dispersion nach einem der Ansprüche 1 bis 3, **dadurch gekennzeichnet, dass** die Monomerenmischung (A) mindestens einen einfach ungesättigten Ester der (Meth)acrylsäure mit einem Alkylrest und mindestens ein Vinylgruppenhaltiges einfach olefinisch ungesättigtes Monomer mit einem an der Vinylgruppe angeordneten Rest, der aromatisch ist oder der gemischt gesättigt-aliphatischaromatisch ist, wobei dann die aliphatischen Anteile des Rests Alkylgruppen sind, enthält.

5. Wässrige Dispersion nach einem der Ansprüche 1 bis 4, **dadurch gekennzeichnet, dass** die Monomerenmischung (B) neben dem mindestens einen mehrfach olefinisch ungesättigten Monomer noch mindestens einen einfach ungesättigten Ester der (Meth)acrylsäure mit einem Alkylrest und mindestens ein Vinylgruppenhaltiges einfach olefinisch ungesättigtes Monomer mit einem an der Vinylgruppe angeordneten Rest, der aromatisch ist oder der gemischt gesättigt-aliphatischaromatisch ist, wobei dann die aliphatischen Anteile des Rests Alkylgruppen sind, enthält.

6. Wässrige Dispersion nach einem der Ansprüche 1 bis 5, **dadurch gekennzeichnet, dass** die Monomerenmischung (B) als mehrfach olefinisch ungesättigte Monomere ausschließlich zweifach olefinisch ungesättigte Monomere enthält.

7. Wässrige Dispersion nach einem der Ansprüche 1 bis 6, **dadurch gekennzeichnet, dass** die Monomerenmischungen (A) und (B) keine hydroxyfunktionellen Monomere und keine säurefunktionellen Monomere enthalten.

8. Wässrige Dispersion nach einem der Ansprüche 1 bis 7, **dadurch gekennzeichnet, dass** die Monomerenmischung (C) mindestens eine alpha-beta-ungesättigte Carbonsäure, mindestens einen einfach ungesättigten Ester der (Meth)acrylsäure mit einem mit einer Hydroxylgruppe substituierten Alkylrest und mindestens einen einfach ungesättigten Ester der (Meth)acrylsäure mit einem Alkylrest enthält.

9. Wässrige Dispersion nach einem der Ansprüche 1 bis 8, **dadurch gekennzeichnet, dass** in den Stufen i. bis iii. die Zudosierung der olefinisch ungesättigten Monomere so erfolgt, dass in der Reaktionslösung ein Anteil freier Monomere von 6,0 Gew.-%, bezogen auf die Gesamtmenge der in der jeweiligen Polymerisationsstufe eingesetzten Monomere, während der gesamten Reaktionsdauer nicht überschritten wird.

10. Wässrige Dispersion nach einem der Ansprüche 1 bis 9, **dadurch gekennzeichnet, dass** das mindestens eine olefinisch ungesättigte Gruppen aufweisende Polyurethan hergestellt wird durch Reaktion wenigstens eines Polyesterdiols und wenigstens eines Polyisocyanats gefolgt von einer Kettenverlängerungsreaktion mit mindestens einem olefinisch ungesättigtem Alkohol.

11. Pigmentierter wässriger Basislack, **dadurch gekennzeichnet, dass** er eine wässrige Dispersion nach einem der Ansprüche 1 bis 10 enthält.

12. Pigmentierter wässriger Basislack gemäß Anspruch 11, **dadurch gekennzeichnet, dass** der gewichtsprozentuale Anteil des mindestens einen in der wässrigen Dispersion gemäß einem der Ansprüche 1 bis 10 enthaltenen Polymerisats SCS, bezogen auf das Gesamtgewicht des pigmentierten wässrigen Basislacks 1,0 bis 24,0 Gew.-% beträgt.

13. Verwendung einer wässrigen Dispersion gemäß einem der Ansprüche 1 bis 10 zur Herstellung von pigmentierten wässrigen Basislacken.

14. Verfahren zur Herstellung einer Mehrschichtlackierung, bei dem

(1) ein pigmentierter wässriger Basislack auf ein Substrat aufgebracht wird,
(2) auf die so erhaltene Basislackschicht ein Klarlack aufgebracht wird und anschließend
(3) die Basislackschicht zusammen mit der Klarlackschicht gehärtet wird, **dadurch gekennzeichnet, dass** in Stufe (1) der pigmentierte wässrige Basislack gemäß einem der Ansprüche 11 oder 12 eingesetzt wird.

**15.** Mehrschichtlackierung hergestellt nach dem Verfahren gemäß Anspruch 14.

## Claims

**1.** Aqueous dispersion comprising a polymer SCS,
prepared by the successive radical emulsion polymerization of three mutually different monomer mixtures (A), (B), and (C) of olefinically unsaturated monomers,
**characterized in that**
at least one of the monomer mixtures (A), (B) or (C) comprises at least one polyurethane (P) containing at least one olefinically unsaturated group,
where, before the polyurethane (P) is admixed to at least one of the monomer mixtures (A), (B), and (C),

the monomer mixture (A) comprises at least 50 wt% of monomers having a solubility in water of less than 0.5 g/l at 25°C, and a polymer (a) prepared from the mixture (A) possesses a glass transition temperature of 10 to 65°C,
the monomer mixture (B) comprises at least one polyunsaturated monomer, and a polymer (b) prepared from the mixture (B) possesses a glass transition temperature of -35 to 15°C,
a polymer (c) prepared from the monomer mixture (C) possesses a glass transition temperature of -50 to 15°C,

and where

i. first of all the monomer mixture (A) is polymerized,
ii. then the monomer mixture (B) is polymerized in the presence of the polymer prepared under i., and
iii. thereafter the monomer mixture (C) is polymerized in the presence of the polymer prepared under ii.,

and
the polyurethane (P) has a surface tension in the range from 40 mN/m to 55 mN/m at 23°C,
and
possesses a polydispersity d of less than 10.

**2.** Aqueous dispersion according to Claim 1, **characterized in that** the fraction of the polyurethane (P) is from 0.05 to 1.8 wt%, based on the solids content of the aqueous dispersion.

**3.** Aqueous dispersion according to either of Claims 1 and 2, **characterized in that** the fraction of the monomer mixture (A) is from 0.1 to 10 wt%, the fraction of the monomer mixture (B) is from 60 to 80 wt%, and the fraction of the monomer mixture (C) is from 10 to 30 wt%, based in each case on the sum of the individual amounts of mixtures (A), (B), and (C).

**4.** Aqueous dispersion according to any of Claims 1 to 3, **characterized in that** the monomer mixture (A) comprises at least one monounsaturated ester of (meth)acrylic acid having an alkyl radical, and at least one vinyl group-containing monoolefinically unsaturated monomer having a radical located on the vinyl group that is aromatic or that is mixed saturated aliphatic-aromatic, in which case the aliphatic fractions of the radical are alkyl groups.

**5.** Aqueous dispersion according to any of Claims 1 to 4, **characterized in that** the monomer mixture (B), in addition to the at least one polyolefinically unsaturated monomer, also comprises at least one monounsaturated ester of (meth)acrylic acid having an alkyl radical, and at least one vinyl group-containing monoolefinically unsaturated monomer having a radical located on the vinyl group that is aromatic or that is mixed saturated aliphatic-aromatic, in which case the aliphatic fractions of the radical are alkyl groups.

**6.** Aqueous dispersion according to any of Claims 1 to 5, **characterized in that** the monomer mixture (B) comprises, as polyolefinically unsaturated monomers, exclusively diolefinically unsaturated monomers.

**7.** Aqueous dispersion according to any of Claims 1 to 6, **characterized in that** the monomer mixtures (A) and (B) contain no hydroxy-functional monomers and no acid-functional monomers.

**8.** Aqueous dispersion according to any of Claims 1 to 7, **characterized in that** the monomer mixture (C) comprises

at least one alpha-beta-unsaturated carboxylic acid, at least one monounsaturated ester of (meth) acrylic acid having an alkyl radical substituted by a hydroxyl group, and at least one monounsaturated ester of (meth)acrylic acid having an alkyl radical.

9. Aqueous dispersion according to any of Claims 1 to 8, **characterized in that** the metered addition of the olefinically unsaturated monomers in stages i. to iii. takes place such that a fraction of free monomers in the reaction solution, based on the total amount of monomers used in the respective polymerization stage, does not exceed 6.0 wt% throughout the reaction period.

10. Aqueous dispersion according to any of Claims 1 to 9, **characterized in that** the at least one polyurethane containing olefinically unsaturated groups is prepared by reaction of at least one polyester diol and at least one polyisocyanate, followed by a chain extension reaction with at least one olefinically unsaturated alcohol.

11. Pigmented aqueous basecoat material, **characterized in that** it comprises an aqueous dispersion according to any of Claims 1 to 10.

12. Pigmented aqueous basecoat material according to Claim 11, **characterized in that** the weight-percentage fraction of the at least one polymer SCS in the aqueous dispersion according to any of Claims 1 to 10, based on the total weight of the pigmented aqueous basecoat material, is 1.0 to 24.0 wt%.

13. Use of an aqueous dispersion according to any of Claims 1 to 10 for producing pigmented aqueous basecoat materials.

14. Method for producing a multicoat paint system by

    (1) applying a pigmented aqueous basecoat material to a substrate,
    (2) applying a clearcoat material to the resulting basecoat film, and then
    (3) curing the basecoat film together with the clearcoat film,

    **characterized in that** the pigmented aqueous basecoat material according to either of Claims 11 and 12 is used in stage (1).

15. Multicoat paint system produced by the method according to Claim 14.

## Revendications

1. Dispersion aqueuse contenant un polymère SCS, fabriquée par la polymérisation en émulsion radicalaire successive de trois mélanges de monomères (A), (B) et (C), différents les uns des autres, de monomères oléfiniquement insaturés,
   **caractérisée en ce que**
   au moins un des mélanges de monomères (A), (B) ou (C) contient au moins un polyuréthane (P) comprenant au moins un groupe oléfiniquement insaturé,
   avant l'incorporation du polyuréthane (P) avec au moins un des mélanges de monomères (A), (B) et (C),
   le mélange de monomères (A) contenant au moins 50 % en poids de monomères ayant une solubilité dans l'eau de moins de 0,5 g/l à 25 °C et un polymère (a), qui est fabriqué à partir du mélange (A), présentant une température de transition vitreuse de 10 à 65 °C,
   le mélange de monomères (B) contenant au moins un monomère polyinsaturé et un polymère (b), qui est fabriqué à partir du mélange (B), présentant une température de transition vitreuse de -35 à 15 °C,
   un polymère (c), qui est fabriqué à partir du mélange de monomères (C), présentant une température de transition vitreuse de -50 à 15 °C,
   et

    i. le mélange de monomères (A) étant tout d'abord polymérisé,
    ii. puis le mélange de monomères (B) étant polymérisé en présence du polymère fabriqué en i.,
    et
    iii. ensuite le mélange de monomères (C) étant polymérisé en présence du polymère fabriqué en ii.,

et
le polyuréthane (P) présentant une tension superficielle dans la plage allant de 40 mN/m à 55 mN/m à 23 °C,
et
présentant une polydispersité d de moins de 10.

2. Dispersion aqueuse selon la revendication 1, **caractérisée en ce que** la proportion du polyuréthane (P) est de 0,05 à 1,8 % en poids, par rapport à la teneur en solides de la dispersion aqueuse.

3. Dispersion aqueuse selon l'une quelconque des revendications 1 à 2, **caractérisée en ce que** la proportion du mélange de monomères (A) est de 0,1 à 10 % en poids, la proportion du mélange de monomères (B) est de 60 à 80 % en poids, et la proportion du mélange de monomères (C) est de 10 à 30 % en poids, à chaque fois par rapport à la somme des quantités individuelles des mélanges (A), (B) et (C).

4. Dispersion aqueuse selon l'une quelconque des revendications 1 à 3, **caractérisée en ce que** le mélange de monomères (A) contient au moins un ester monoinsaturé de l'acide (méth)acrylique ayant un radical alkyle et au moins un monomère monooléfiniquement insaturé contenant un groupe vinyle ayant un radical agencé sur le groupe vinyle, qui est aromatique ou qui est saturé-aliphatique-aromatique mixte, les fractions aliphatiques du radical étant alors des groupes alkyle.

5. Dispersion aqueuse selon l'une quelconque des revendications 1 à 4, **caractérisée en ce que** le mélange de monomères (B) contient outre ledit au moins un monomère polyoléfiniquement insaturé également au moins un ester monoinsaturé de l'acide (méth)acrylique ayant un radical alkyle et au moins un monomère monooléfiniquement insaturé contenant un groupe vinyle ayant un radical agencé sur le groupe vinyle, qui est aromatique ou qui est saturé-aliphatique-aromatique mixte, les fractions aliphatiques du radical étant alors des groupes alkyle.

6. Dispersion aqueuse selon l'une quelconque des revendications 1 à 5, **caractérisée en ce que** le mélange de monomères (B) contient exclusivement des monomères bioléfiniquement insaturés en tant que monomères polyoléfiniquement insaturés.

7. Dispersion aqueuse selon l'une quelconque des revendications 1 à 6, **caractérisée en ce que** les mélanges de monomères (A) et (B) ne contiennent pas de monomères à fonction hydroxy et pas de monomères à fonction acide.

8. Dispersion aqueuse selon l'une quelconque des revendications 1 à 7, **caractérisée en ce que** le mélange de monomères (C) contient au moins un acide carboxylique alpha-bêta-insaturé, au moins un ester monoinsaturé de l'acide (méth)acrylique ayant un radical alkyle substitué avec un groupe hydroxyle et au moins un ester monoinsaturé de l'acide (méth)acrylique ayant un radical alkyle.

9. Dispersion aqueuse selon l'une quelconque des revendications 1 à 8, **caractérisée en ce que**, dans les étapes i. à iii., l'ajout des monomères oléfiniquement insaturés a lieu de telle sorte qu'une proportion de monomères libres de 6,0 % en poids dans la solution de réaction, par rapport à la quantité totale des monomères utilisés dans l'étape de polymérisation respective, ne soit pas dépassée pendant la durée de réaction totale.

10. Dispersion aqueuse selon l'une quelconque des revendications 1 à 9, **caractérisée en ce que** ledit au moins un polyuréthane comprenant des groupes oléfiniquement insaturés est fabriqué par réaction d'au moins un polyesterdiol et d'au moins un polyisocyanate, suivie par une réaction d'allongement de chaîne avec au moins un alcool oléfiniquement insaturé.

11. Vernis de base aqueux pigmenté, **caractérisé en ce qu'**il contient une dispersion aqueuse selon l'une quelconque des revendications 1 à 10.

12. Vernis de base aqueux pigmenté selon la revendication 11, **caractérisé en ce que** la proportion en pourcentage en poids dudit au moins un polymère SCS contenu dans la dispersion aqueuse selon l'une quelconque des revendications 1 à 10, par rapport au poids total du vernis de base aqueux pigmenté, est de 1,0 à 24,0 % en poids.

13. Utilisation d'une dispersion aqueuse selon l'une quelconque des revendications 1 à 10 pour la fabrication de vernis de base aqueux pigmentés.

14. Procédé de fabrication d'un vernissage multicouche, selon lequel

(1) un vernis de base aqueux pigmenté est appliqué sur un substrat,
(2) un vernis transparent est appliqué sur la couche de vernis de base ainsi obtenue, puis
(3) la couche de vernis de base est durcie conjointement avec la couche de vernis transparent, **caractérisé en ce que**, dans l'étape (1), le vernis de base aqueux pigmenté selon l'une quelconque des revendications 11 ou 12 est utilisé.

**15.** Vernissage multicouche fabriqué par le procédé selon la revendication 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19948004 A1
- DE 10043405 C1
- WO 9215405 A
- WO 9749745 A
- WO 9749747 A
- DE 19930665 A1
- DE 19914896 A1
- EP 0228003 A1
- EP 0634431 A1
- DE 4437535 A1
- WO 9115528 A
- EP 0521928 B1
- DE 4009858
- DE 4009858 A1


### In der Beschreibung aufgeführte Nicht-Patentliteratur


- **HONG, KIM, KIM.** *Park beschreiben in dem Korea Polymer Journal (Korea Polym. J.,* vol. 7 (4), 213-222
- Polyurethane. Kunststoff-Handbuch. Carl Hanser Verlag, 1983, vol. 7
- **LITERATUR X ; S. CHAI ; Q.X. HOU ; F.J. SCHORK.** *Journal of Applied Polymer Science,* 2006, vol. 99, 1296-1301
- **T.G. FOX.** Bull. Am. Phys. Soc, 1956, vol. 1, 123
- Römpp-Lexikon Lacke und Druckfarben. Georg Thieme Verlag, 1998, vol. 176, 451
- **LACKE ; DRUCKFARBEN.** Römpp Lexikon. Georg Thieme Verlag, 1998, vol. 274
- Römpp Lexikon, Lacke und Druckfarben. Georg Thieme Verlag, 1998, vol. 274
- Römpp-Lexikon Lacke und Druckfarben. Georg Thieme Verlag, 1998, 235
- **A.B.J. RODRIGUEZ.** *JOCCA,* 1992, vol. 4, 150-153
- *gemäß Korea Polym. J.,* vol. 7 (4), 213-222
- *hergestellt gemäß Korea Polym. J.,* vol. 7 (4), 213-222